# EUROPEAN PATENT SPECIFICATION

(11) **EP 1 593 240 B1**
(45) Date of publication and mention of the grant of the patent: **19.11.2008**
(21) Application number: 04708094.0
(22) Date of filing: 04.02.2004
(51) Int. Cl.: H04L 12/56

(54) **METHOD AND APPARATUS FOR FAST RE-CONFIGURATION OF A NETWORK TOPOLOGY**
VERFAHREN UND GERÄT ZUR SCHNELLEN REKONFIGURATION EINER NETZWERKTOPOLOGIE
PROCEDE ET APPAREIL POUR RECONFIGURATION RAPIDE D'UNE TOPOLOGIE DE RESEAU

(30) Priority: 04.02.2003 NO 20030563
(43) Date of publication of application: 09.11.2005
(73) Proprietor: Ontime Networks AS, 0489 Oslo (NO)
(72) Inventor: HOLMEIDE, Øyvind, N-0489 Oslo (NO); LILJESTRØM, Lennart, S-725 91 Västerås (SE)
(74) Representative: Briddes, Sam
(86) International application number: PCT/NO2004/000033
(87) International publication number: WO 2004/070983

(56) References cited:
- EP-A- 0 684 716
- WO-A-00/28685
- WO-A-02/076028
- IEEE: "PART 3 MEDIA ACCESS CONTROL (MAC) Bridges - Amendment 2: Rapid Reconfiguration" IEEE STD 802.1W-2001, [Online] 9 July 2001 (2001-07-09), pages I-108, XP002294031 NEW YORK Retrieved from the Internet: URL:http://ieeexplore.ieee.org/iel5/7525/2 0482/00946612.pdf?isNumber=20482&prod=STD& arnumber=946612&arSt=&ared=&arAuthor=> [retrieved on 2004-08-26] cited in the application
- RAVINDRAN K ET AL: "Reconfiguration of 'data connectivity trees' in large dynamic networks" GLOBECOM 2003, vol. 7, 1 December 2003 (2003-12-01), pages 3758-3764, XP010677318

## Description

### TECHNICAL FIELD

The present invention relates in general to computer networks, and more specifically to a network element and a method for controlling a network element.

### BACKGROUND

The Spanning Tree Algorithm (STA) implemented according to the IEEE802.1D standard runs on Bridges in order to prevent loops in a network. STA is also used for achieving redundancy. Redundant ports are important as backup ports in case of failure in a network. Such ports are referred to as Blocking ports. One of the Bridges in the network is elected as the Root Bridge. The Root Bridge becomes the focal point in the network. All other decisions in the network, such as which ports are in Blocking state and which port is forwarding packets, i.e. Forwarding state, are made from the perspective of the Root Bridge. STA related information such as Bridge Id and path cost parameters is exchanged between the Bridges. This information is carried in Bridge Protocol Data Units (BPDUs). These parameters are used for building the Spanning Tree (ST). BPDU packets can be received on a Blocking port, but no other packets are forwarded on a Blocking port. Which ports in a ST that are Blocking depend on the path cost. Any ST enabled port can be Blocking on any Bridge in the network, including the Root Bridge. The port receiving the best BPDU on a bridge is the Root port. This is the port that is the closest to the Root Bridge in terms of Root path cost. Thus, every Bridge Port in the network has a Root Path Cost associated with it. This is the sum of the Path Costs for each Bridge Port receiving frames forwarded from the Root on the least cost path to the Bridge.

The principles for how to handle a Topology Change event such as a link loss or link error on a network drop link that is part of the active topology are described in the IEEE802.1D standard. A Bridge can change the active topology of the Bridged network, where such an event is received. The Bridge will transmit a Topology Change Notification (TCN) BPDU on the network to which its Root Port is attached. This transmission is repeated until the Bridge receives a Topology Change Acknowledgment (TCA). The TCA is carried in a Configuration BPDU, thus the TCN will eventually be acknowledged or further reconfiguration will take place. The next Bridge, i.e. the Designated Bridge, in the path towards the Root Bridge passes the TCN towards the Root using the same procedure.

If the Root receives such a TCN, or changes the topology itself, it will set a Topology Change flag, TC bit, in all Configuration Messages transmitted for some time. This time is such that all Bridges will receive one or more of the Configuration Messages or further reconfiguration will take place. Dynamic address entries will age out faster, while this flag is set. This means that entries that are no longer valid due to the Topology Change will be reasonable fast removed from those Bridges ports, where they are no longer present.

The ability to detect Topology Changes can be enabled or disabled on a per-Port basis. The intent of this facility of the to IEEE802.1D standard, is to allow Topology Change detection to be disabled on Ports where it is known that a single end station is connected, and where powering that end station on and off would cause the TCN mechanism to be triggered.

The Rapid Spanning Tree Algorithm (RSTA) is a new Standard, see IEEE802.1w for details. This standard is an improvement of STA.

The most important feature of RSTA compared to STA is a rapid transition of a port to the Forwarding state. The legacy STA is passively waiting for the network to converge before turning a port into the Forwarding state.

Faster convergence is achieved by tuning the conservative default STA parameters, reducing the number of port states and to take advantage of the fact that the links between modern Bridges now in most cases are based on full duplex connectivity. There are only three port states left in RSTP, corresponding to the three possible operational states. I.e. Discarding, Learning and Blocking. The 802.1D states: Disable, Blocking and Listening have been merged into a unique 802.1w Discarding state.

RSTA is able to actively confirm that a port can safely transition to Forwarding without relying on any timer configuration.

Another difference between STA and RSTA is the transmission of BPDU packets. A STA non-Root Bridge will only generate BPDUs when it received such a packet on its Root port. Thus, a STA Bridge is rather relaying BPDUs than actually generating them. This is not the case for RSTA. A RSTA Bridge sends a BPDU with its current information on a regular interval (i.e. Bridge Hello time: 1-10 seconds). The Topology Change mechanism of RSTA is also changed compared to STA. A Bridge will modify its dynamic address table if a BPDU packet is received and the TC bit is set.

The time it takes to change the ST port states in a RSTA enabled network is significant improved compared to STA. However, a BPDU packet in a RSTA enabled network is still only sent on one LAN segment. A BPDU is not sent directly through a RASTA enabled Bridge. This means that every RSTA enabled Bridge will introduce some latency in the millisecond range.

The establishment of a new active topology with a correct dynamic address table of each Bridge for STA or RSTA network in case of a Topology Change or change of STA or RSTA parameters via management suffers from the fact that the propagation of new BPDUS parameters thru the network and propagation of new Topology Change information is time consuming. The time it takes to establish a new active topology is 30- 60 seconds in case of STA and typical a few seconds for RSTA. This is not acceptable for network application with real time requirements such as Voice over IP, video streaming or automation systems.

US-patent 6,262.977 describes an improved method to the STA in order to achieve faster re-configuration of a network in case of a topology change. Some of the ST port states are removed and the transition between the states can be made faster. A Bridge in a network based on this method knows the identification of the Root Bridge and has classified its port into different roles, i.e. one Root port, one or more Designated ports and one or more Alternative ports. Fast transition from Blocking to Forwarding of a port from Alternative port to Root port can be made based on this method.

EP-patent 0 684 716 discloses a ST arrangement with network nodes enabling fast ST reorganization, self node setting and Fast ST recovery in case of multiple network failures.

### SUMMARY OF THE INVENTION

The time it takes establish a new active topology in an Ethernet type of network is a critical parameter. Established network redundancy protocols such as STA and RSTA are often too slow for many applications.

A primary object of this invention is to add new techniques to these and similar standards in order to achieve a re-configuration time in the millisecond range for complex network topologies involving several network loops.

The disadvantages of the prior art solution are overcome by a method, a network element and a computer network as set forth in the appended independent claims.

Further objects and advantages are achieved by the features set forth in the dependent claims.

### DETAILED DESCRIPTION OF THE INVENTION

The invention will now be described in further detail by way of examples, and with reference to the accompanying drawings, where
- Fig. 1: is a simplified block diagram of generic multi port managed network element,
- Fig. 2: is a schematic block diagram of an implementation for fast re- configuration of a network topology on a network element,
- Fig. 3: is a graph illustrating a Spanning Tree topology.
- Fig. 4a: is a graph illustrating an active Spanning Tree topology, when a Topology Change event occurred,
- Fig. 4b: is a graph illustrating the port states after the Topology Change event,
- Fig. 4c: is a graph illustrating the new active Spanning Tree topology after the Topology Change event.
- Fig. 5a: is a graph illustrating an active Spanning Tree topology, where other type of event than link change or change of path cost parameter is used as a Topology Change Event.
- Fig. 5b: is a graph illustrating the new active Spanning Tree topology after exceeding an error counter threshold on one of the links.
- Fig. 6a: is a graph illustrating a topology where one of the non Root Bridges is selected as the Sub-Root for a given TCA.
- Fig. 6b: is a graph illustrating a topology where the Root Bridge is selected as the Sub-Root for a given TCA
- Fig. 7a: is a graph illustrating a topology where a "link off" TCA occurred, and where the TCA detecting Bridges handle the TCA.
- Fig. 7b: is a graph illustrating the new active topology after the "link off" TCE in Fig. 7a is handled.
- Fig. 8a: is a graph illustrating a topology where a "link off" TCA occurred due to a Bridge loss, where the TCE represented a multi TCE scenario.
- Fig. 8b: is a graph illustrating the new active topology after the "link off" TCE in Fig. 8a is handled.
- Fig. 9a: is a graph illustrating a topology where a "link off" TCA occurred due to a Bridge loss, and where the TCA detecting Bridges handle the TCA.
- Fig. 9b: is a graph illustrating the new active topology after the "link off" TCE in Fig. 9a is handled.
- Fig. 10a: is a set of four BTI flow charts,
- Fig. 10b: is a set of flowcharts illustrating a port link up process, a ST port link off process and a path cost parameter change process,
- Fig. 11: is a TCE flowchart,
- Fig. 12a: includes a TCC transmit flow chart and a TCC timer flow chart,
- Fig. 12b: is a TCC receive flow chart,
- Fig. 13: includes a TCA transmit flow chart and a TCA receive flow chart,
- Fig. 14: includes a MTU transmit flow chart and a MTU receive flow chart, and
- Fig. 15: includes a TSC receive flow chart, a TSC transmit flow chart and a TDC flow chart.

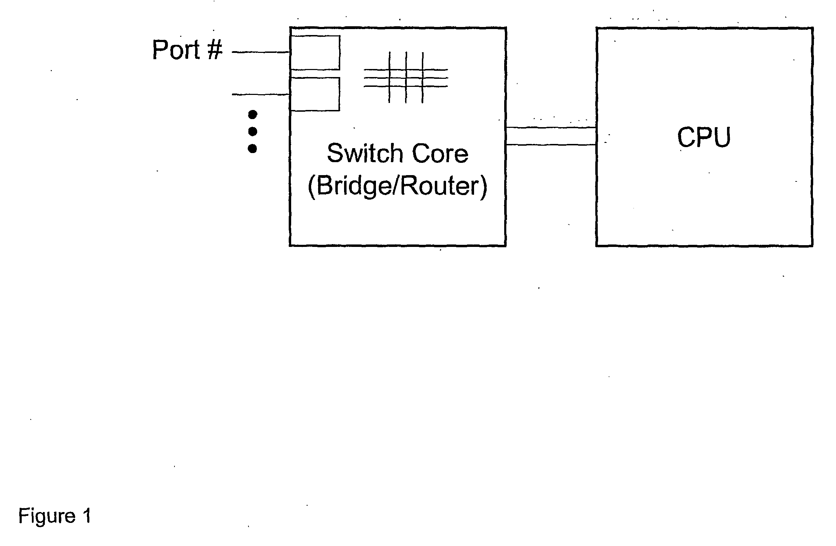

Fig. 1 is a simplified block diagram of generic multi port managed network element according to the invention. The network element comprises a Switch Core and a CPU module. Packet data and management information is sent between these two modules. For simplicity and readability, the term "network element" is replaced by the term "Bridge" in the following detailed description. The implementation described in the following is however relevant for various types of network elements, e.g. Bridges, Switches, Routers, Gateways, etc, and the scope of the invention thus relates to network elements in general, although Bridges are specifically mentioned herein by example.

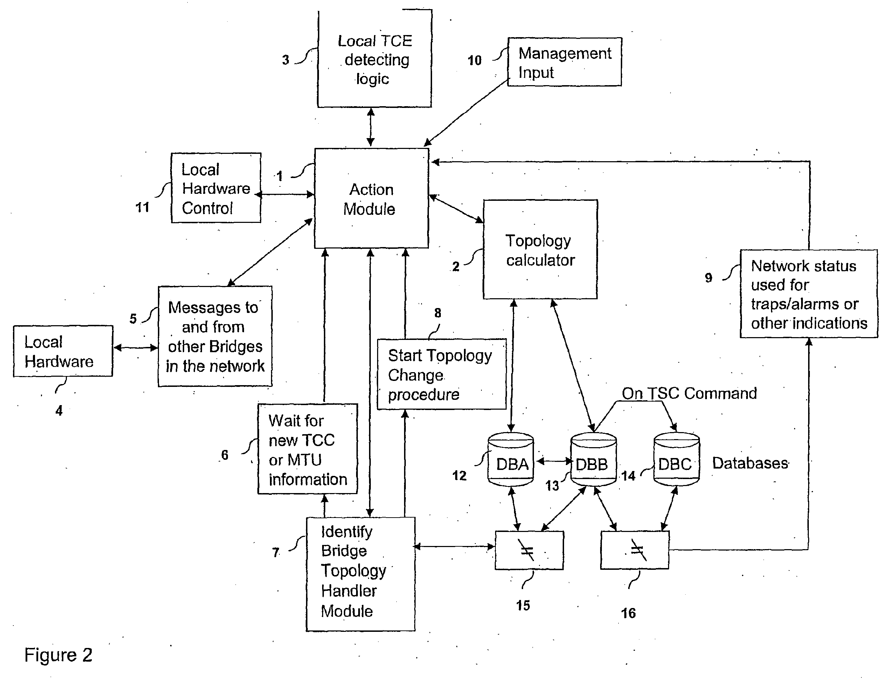

Fig. 2 is a schematic block diagram of an implementation for fast re-configuration of a network topology on a Bridge according to the invention.

A set of packets may be transmitted between the Bridges in the network in order to achieve fast re-configuration according to the invention. The set may include packets of the following types:
- Bridge Topology Information (BTI)
- Topology Change Event (TCE)
- Topology Change Command (TCC)
- Topology Change Acknowledgement (TCA)
- MAC Table Update (MTU)
- Topology Save Command (TSC)
- Topology Difference Command (TDC)

Such packets are sent to the local hardware, i.e. the physical ports connected to the network, and received from the local hardware through the "Messages to and from other Bridges in the network" module 5 and the "Action" module **1**. The "Action" Module **1** handles the operation for fast re-configuration of a network topology. This involves the configuration of the local hardware such as port state settings through the "Local Hardware Control" module, **11**, calculation of the total topology and identification of topology changes through the "Topology calculator" **2**, based on the BTI, TCE and/or TCC information received or local detected TCE received via the "Local TCE detecting logic" module **3**. The stored Spanning Tree model (ST model) will be updated with information derived from the TCE. The ST model contains a subset of the network. The subset contains all the Bridges or only some of the Bridges in the network.

The "Action" module **1** has also an interface to the "Identify Bridge Topology Handler" module **7**. The "Identify Bridge Topology Handler" module 7 has the function of verifying if the Bridge itself is the Bridge Topology Handler (BTH) or not. If the Bridge is a BTH, it shall start a Topology Change procedure based on the ST model in order to handle the TCE, where the subset in the ST model includes at least the Bridge, the origin of the TCE and the Bridges that are affected by the topology change.

Four rule set examples are given below that is used by the Identify Bridge Topology Handler Module 7 for determining if the Bridge is the BTH for the received TCE or not. A person skilled in the art will realize that other rule sets may also be applied.
Rule set 1. Root Bridge always acts as the BTH,
Rule set 2. A restricted numbers of Sub-Root Bridges may act as the BTH,
Rule set 3. Any Sub-Root Bridge may act as the BTH, or
Rule set 4. The TCE Detecting Bridge acts as the BTH.

The rule set applied for one Bridge must also be applied for other Bridges in the network. Thus, the selection of a rule set is performed at an initial stage of the establishment of the network, and data identifying the rule set that shall be applied, must be transmitted to every Bridge which is subsequently included to operate in the network.

According to the Rule Set 1, the Bridge has more or less the same functionality as the Root Bridge in a STA or RSTA implementation. The Root Bridge in the network is the Bridge Topology Handler for any TCE.

According to Rule Set 2 and 3, a Sub-Root Bridge as BTH for a given TCE is identified based on the location of the TCE in the ST. The Sub-Root Bridge for a given TCE can be defined as the top-most Bridge in a Sub-Tree, where the Sub-Tree is defined as the part of the ST that is affected by the TCE.

If Rule set is 2 is applied, only a restricted number of Bridges may act as a BTH. In this case, the Identify Bridge Topology Handler module will perform the following steps:
First, the Bridge determines if it is enabled to operate as a BTH. The Bridge is not the BTH for the given TCE, if it is not enabled to operate as a BTH.

If the Bridge is enabled to operate as a BTH, the Bridge will retrieve from the database holding the Spanning Tree model information that indicates if the origin of the TCE is included in the Sub-Tree for which the Bridge is the Sub-Root. If this is not the case, the Bridge is not the BTH.

Otherwise, a test is performed to decide if another Sub-Tree is also involved in the TCE. If this is not true, the Bridge is the BTH for the given TCE.

If on the other hand another Sub-Tree is involved, a priority rule is further applied to determine if the Bridge is the BTH or not.

If Rule Set 3 is applied, any Bridge may act as the BTH. In this case, a first test is performed to determine if the TCE is associated to the Root Port of the Bridge. If this is true, the Bridge is not the BTH for the TCE.

If the first test is false, a second test is performed to determine if the TCE involves the introduction of a loop in the network topology. If this second test is false, and the TCE is an event local to the Bridge, the Bridge is determined to be the BTH for the TCE. Else, if the second test is false and the TCE is non-local (i.e. originally detected by another Bridge and detected by this Bridge by receiving a TCE data packet), the Bridge is determined not to be the BTH for this TCE.

If the second test is true, a third test is performed to determine if the Bridge is both included in the loop established by the TCE, and also closest to the Root in terms of path costs. If this test is false, the Bridge is not the BTH for this TCE. Else, if the third test is true, the Bridge is the BTH for the TCE.

If Rule Set 4 is applied, the TCE detecting Bridge is also the BTH for the TCE. All Bridges in the network can act as a BTH if the Bridges support Rule Set 4. This rule set is based on the principle that the TCE detecting Bridge or Bridges shall handle the Topology Change procedure.

In this case, the Bridge simply determines if the TCE is a local TCE. If this is true, the Bridge is also the BTH. Otherwise, the Bridge is not the BTH.

Implementations based on Rule Set 2, 3 or 4 do not depend on a traditional Root Bridge role. The Root Bridge is only used as a focal point for the calculation of the network topology, and does not take part in the establishment of a new network topology unless the Root Bridge is affected by the TCE.

If the output from the "Identify Bridge Topology Handler" module indicates that the Bridge itself is the Bridge Topology Handler for the TCE, Start Topology Change Procedure module **8** is activated. Otherwise, the module **6** "Wait for new TCC or MTU information" is activated. Another Bridge will be established as the BTH for the TCE.

The Bridge comprises three databases: Database DBA 12 contains new topology (under processing), database DBB 13 contains active topology of the network, and database DBC 14 contains install topology (saved copy of engineered topology).

The BTH sends TCC and in most cases MTU information to the other Bridges, and might request a TCA from some of the other Bridges in order to verify that the required changes are performed. A TCE detecting Bridge send a TCE packet to network both in case the Bridge is a BTH or not. Two TCE packets caused by a single TCE might be received at the BTH since often two TCE detecting Bridges detect the same TCE. The "Identify Bridge Topology Handler" module **7** checks for differences between the database DBA 12 and DBB 13, where database DBA contains the new topology after one or more TCEs have occurred and DBB contains the active topology prior to the TCE or TCEs.

The "Topology calculator" module **2** is connected to the databases, and is arranged to update the database content of all the databases based on requests from the "Action" module 1. The Topology calculator is further arranged to get the topology changes required in the network on the Bridge itself and on all other Bridges in the networks affected by the TCE. The required changes contain new port states and MTU information for all Bridges affected by the TCE. The "Action" module 1 must also handle multi TCEs, i.e. one or more new TCE are received through the "Local TCE detecting logic" module or through the reception of TCE, TCC packets while a Topology Change procedure is ongoing. This procedure shall be aborted, and the top-most Bridge in the Sub-Tree covering all TCEs shall act as the BTH if the Bridges support the functionality of Rule Set 2, 3 or 4. Otherwise, the Root Bridge must always act as the BTH. The Bridge can receive TSC packets from e.g. a network management station, where the Bridge is instructed to store the current topology or a specified topology in database C 14. This topology is considered as the preferred topology. An active topology that differs from the preferred topology might trig an alarm, i.e. a TDC packet.

The first comparison module **15** is arranged to determine that there is a difference between the content of database DBA and database DBB.

The second comparison module **16** is arranged to determine that there is a difference between the content of database DBB and database DBC.

The "Management Input" module **10** can also have impact on the operation of the "Action" module **1**. Path cost parameters can be changed from the Management Input module **10**, and the transmission of TSC packets can be trigged from this module 10.

### Bridge Topology Information (BTI)

The total topology information shall preferably be known on every Bridge in the network. Thus, each Bridge is able to draw the total ST including the port states on every Bridge and where each port is connected. The ST is calculated based on the same principles that are used for STA and RSTA or similar techniques. A Bridge will forward BTI packets to its neighbor Bridges including several BTI Records each containing:
- BTI packet identifier.
- Port states, and where each port is connected; i.e. the Bridge Id parameters and which ST port on which neighbor Bridge each ST port is connected, is also specified if the port is connected to another Bridge. Note: only two ST port states are described for this network redundancy technique (, but the technique is not limited to only two port states):
   o Blocking
   o Forwarding
- Path cost parameters.
- Bridge Id parameters.

The Bridge will generate a BTI Record for the Bridge itself and for each neighboring Bridge and all other Bridges that can be reached via these neighboring Bridges thru Forwarding ports, except the neighboring Bridge where the BTI packet will be sent and the Bridges that only can be received thru this Bridge thru Forwarding ports. A BTI packet can be sent from The Bridge CPU on both Forwarding and Blocking ports and only on one LAN segment. I.e. a BTI packet will only be forwarded to the CPU of a neighboring Bridge. This means that the propagation of BTI during start-up will require some extra start-up time. However, new BTI packets will be generated as soon as BTI, TCC or TCA packets arrive with new topology information or a local TCE is generated, while BTI packets will be sent on a regular interval when the topology is static.

A BTI record for a Bridge and for all Bridges that only can be received thru this Bridge will be removed if no new BTI packet is received on a given port for a pre defined time interval.

Link availability and drop link speed are both important in a redundant network topology. The STA uses speed and user defined path costs as path cost parameters. However, other parameters should also be considered as path cost parameters. The following additional parameters can be used:
- Duplex connectivity, the path cost will be set higher if the link is a half duplex link compared to a full duplex link.
- Link type, the link type affects the path cost. E.g. fiber links are considered as the best (low path cost) alternative and radio links are the worst (high path cost).
- Priority capability, a port without priority support should represent a link with higher path cost than a port with such capability.
- CRC or other error counters, the path cost of a link will increase and trig TCEs when passing pre-defined a threshold of a relevant error counter.

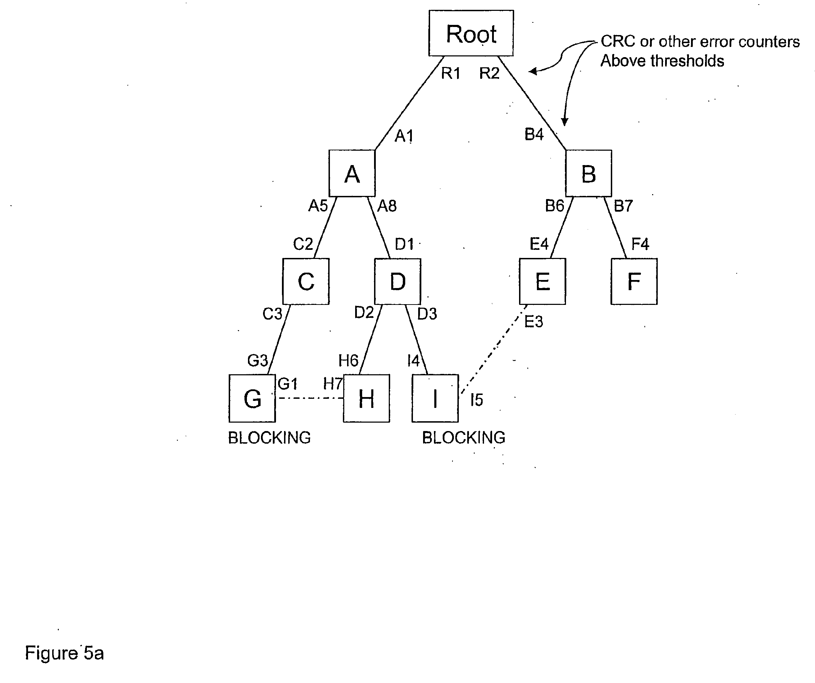

Fig. 5a is a graph illustrating an active Spanning Tree topology, where other type of event than link change or change of path cost parameter is used as a Topology Change Event. "CRC and other error counters" is used as a criterion for calculating a ST that differs from a ST only based STA path cost calculation.

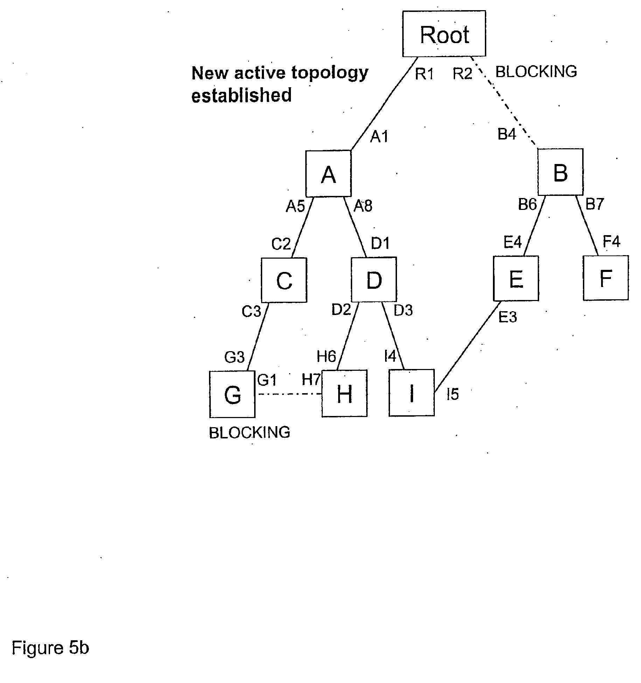

Fig. 5b is a graph illustrating the new active Spanning Tree topology after exceeding an error counter threshold on one of the links.

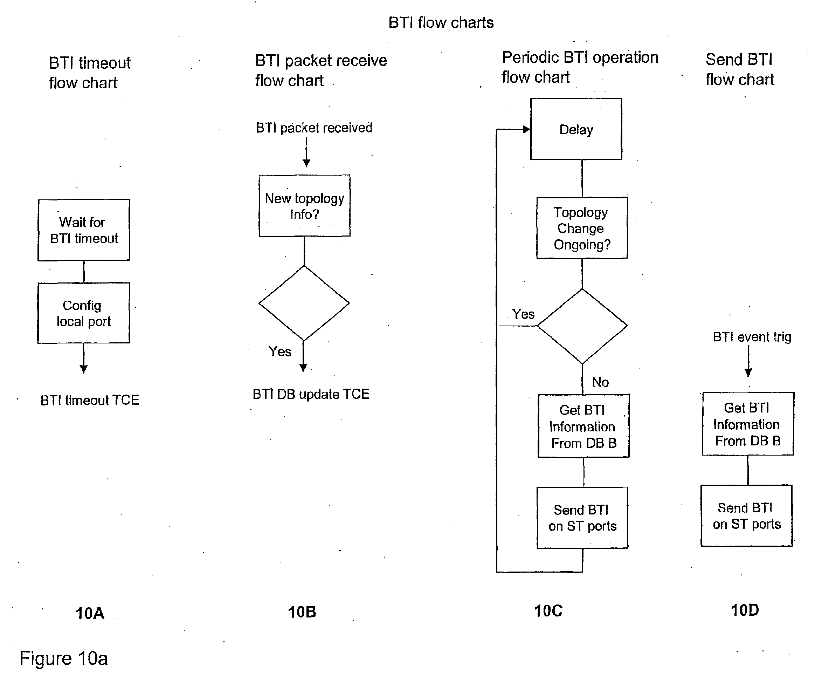

Fig. 10a is a set of four BTI flow charts, identified by 10A, 10B, 10C and 10D, respectively.

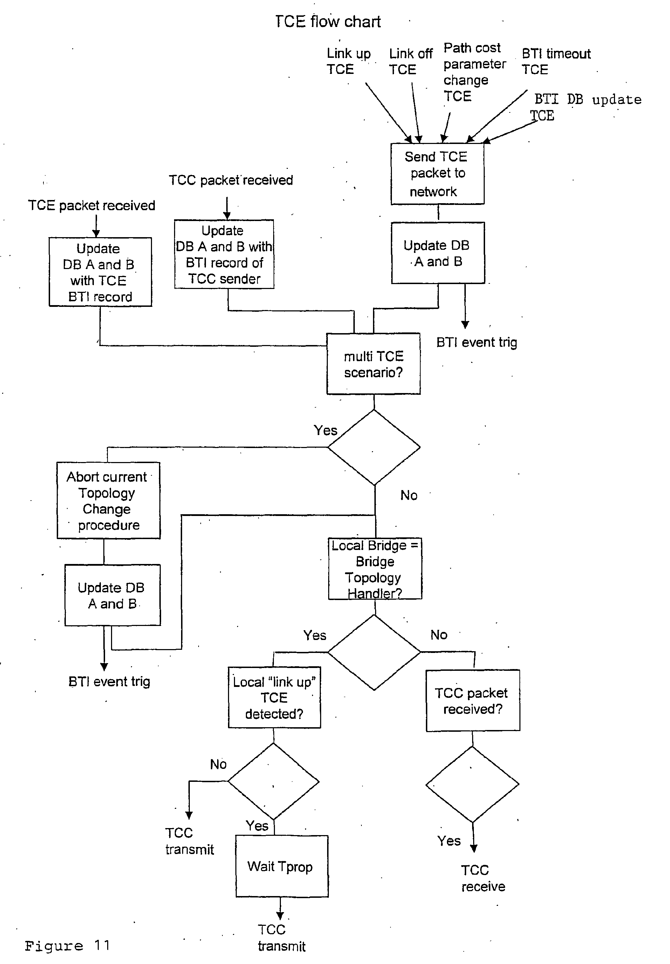

In fig. 10a, 10A is a flowchart for the handling of a BTI timeout. The output labeled "BTI timeout TCE" links to an identically labeled input to the TCE flowchart in fig. 11.

As described with reference to fig. 11, databases A and B will be updated in case of a BTI timeout, new BTI information will be sent on the ST ports (10D) and a local BTI timeout TCE will be generated.

In fig. 10a, flow chart 10B shows how the reception of a BTI packet from a neighbor Bridge supporting fast re-configuration is handled. The output labeled "BTI DB update TCE" links to an identically labeled input to the TCE flowchart in fig. 11. As described with reference to fig. 11, databases A and B will be updated if the BTI contains new topology information, new BTI will be sent on the ST ports (10D) and a BTI DB update TCE will be generated.

In fig. 10a, flow chart 10C shows the periodic BTI operation where BTI information is sent on a regular interval on all ST ports.

In fig. 10a, flow chart 10D shows the asynchronous transmission of a BTI packet in case of a BTI event trig caused by a local TCE.

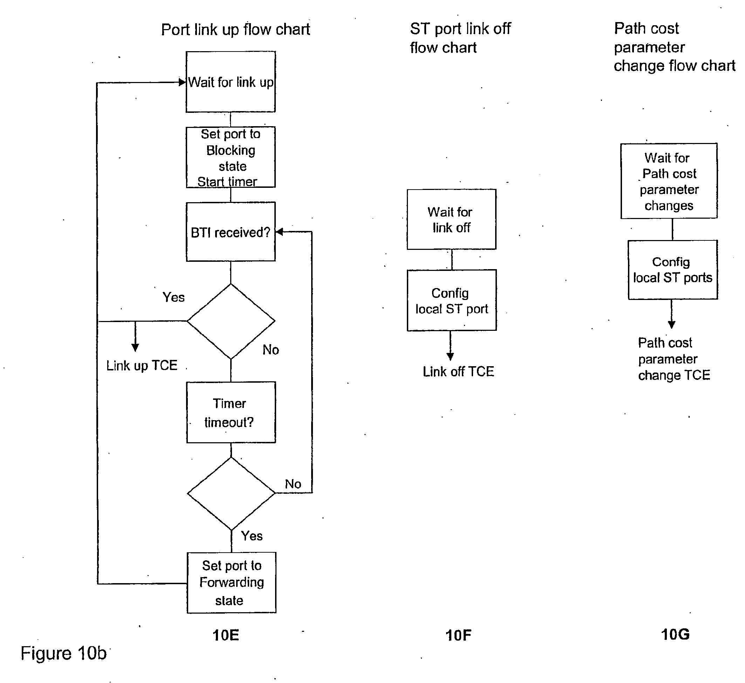

Fig. 10b is a set of flowcharts illustrating a port link up process (10E), a ST port link off process (10F) and a path cost parameter change process (10G), respectively.

In fig. 10b, the port link up flow chart (10E) describes how Bridge ports supporting fast re-configuration is identified and the setting of a non Bridge port in Forwarding state as soon as the port is identified as a non-Bridge port. The port is put in Blocking state and a timer is started, when a link up event occurs. Then a check is done if a BTI packet is received on this port or not. The port is considered as a Bridge port and then returns to wait for a new link up event if a BTI packet is received. A check for a timeout is performed if a BTI packet is not received. The port is set to Forwarding state immediately if a timeout occurs; otherwise it continues to check for BTI packets. Database A and B will be updated, see Fig. 11, new BTI information will be sent on the ST ports (10D) and a local link up TCE is generated and sent to the TCE flow chart if the port is identified as a ST port.

In fig. 10b, the ST port link off flow chart (10F) configures the local ST port in case of a ST port off event, updates database A and B accordingly, see Fig. 11, new BTI information will be sent on the ST ports (10D) and a local Link off TCE will be generated.

In fig. 10b, the Path cost parameter change flow chart (10G) configures the local ST port in case of Path cost parameter change event, updates database A and B accordingly, see Fig. 11, new BTI information will be sent on the ST ports (10D) and a local Path cost parameter change TCE will be generated.

The event based transmission of BTI packets, BTI event trig, is also meant to handle the situation where the BTI on the Bridges differs. This can happen when packets for fast re-configuration of the network are lost, or a multi TCE scenario is not detected on all the Bridges in the network.

### Topology Change Event (TCE)

The following local events will generate a TCE:
- Link between two Bridges with fast re-configuration support established.
- Link between two Bridges with fast re-configuration support lost.
- Path cost parameters changed.
- BTI Timeout.
- BTI DB (database) update

The TCE detecting Bridge generates a TCE packet. A TCE packet contains the following:
- TCE packet identifier.
- Bridge Id of BTH
- Bridge Id of TCE detecting Bridge
- TCE type.
- New BTI of TCE detecting Bridge

A TCE packet will be sent to the BTH via all the Bridges between the TCE detecting Bridge and the BTH, without being delayed by any Bridge CPUs. A TCE packet can be received on a Blocking port, but will then only be forwarded to the Bridge CPU. A TCE packet received on a Forwarding port will be forwarded to the Bridge CPU and other Forwarding ports, but not on any Blocking ports. Thus, the TCA packet is not only received by the BTH, but also by other Bridges in the network. These Bridges will on the reception of such a packet know that a Topology Change procedure is started. A TCE packet will be sent from the TCE detecting Bridge even though the local Bridge is the BTH.

The TCE packet propagation thru the network should preferably be based on multicast or broadcast communication. However, it is also possible to base the implementation on unicast communication, but this will involve transmission of the same information several times.

A Bridge that detects a TCE will not change the state of any of its ST ports to Forwarding state, before the BTH tells it to do so. The initial state of a port will first be set to Blocking by the TCE detecting Bridge without any interaction with the BTH or any other Bridges.

The same TCE might be detected on two Bridges. E.g. link establishment or link loss between two Bridges. The BTH must be able to handle the situation where two TCE packets might be sent from each of the TCE detecting Bridges to the BTH. This can be avoided in case of a link establishment, if BTI packets are inter-changed on the new link between the two Bridges. The BTI for the two Bridges can be used to identify which of the Bridges that will send the TCE packet or handle the TCE if one of the Bridges is the BTH. It is also convenient that the a "link up" detecting Bridge that becomes the BTH for this TCE waits a pro-defined time interval after new BTI and TCE packets are sent before the Topology Change procedure is continued. The pre-defined time interval Tprop, should be larger than the maximum time it takes to propagate new topology information thru the network by using BTI packets. This is relevant in order to detect a multi TCE scenario in the network. This implementation has particular relevance in case of a "link up" TCE since this TCE might introduce temporary loops in case of a multi TCE scenario.

Fig. 11 shows the TCE flowchart. The TCE flow chart is entered when a local TCE is detected or when a TCE or TCC packet is received.

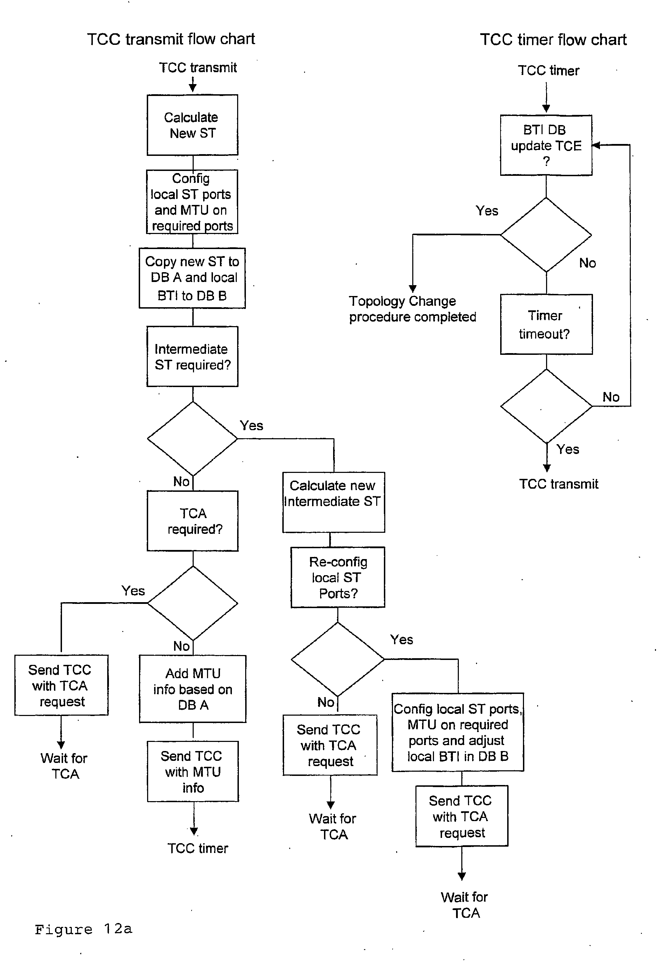

Data base A and B will be updated based on the received TCE, a TCE packet will be sent to the network on the ST ports in case of a local detected TCE and a check for a multi TCE scenario is then performed. A multi TCE scenario is not present if the Bridge receives several TCEs caused by the same event. Thus, the Bridge must be able to verify whether two received TCEs describe the same event or not. The database content of A and B will differ in case a Topology Change procedure is ongoing. Thus, these two databases can be compared in order to verify whether a multi TCE scenario is present or not, when a new TCE is received. An ongoing Topology Change procedure running on the Bridge will be aborted if a multi TCE scenario is identified and database A and B will be updated with the new states of the local ST ports. The only ST port in Forwarding state could be e.g. the Root port as defined in STA. Then a check is performed in order to verify if the Bridge is a BTH for the current TCE or TCEs in case of a multi TCE scenario. The TCC transmit flow chart is entered if the Bridge is identified as the BTH, see Fig. 12a. while the TCC receive flow chart will be entered in case the Bridge is not the BTH, and a TCC packet was received.

### Topology Change Command (TCC)

The BTH will generate one or more TCC packets that are sent as a multicast or broadcast packet to every Bridge in the network based on TCE packet received or local TCE detection. The TCC packet contains the following:
- TCC packet identifier
- TCC reference
- BTH Bridge Id parameters
- BTI for the whole network
- Request for acknowledgement
- Request for MTU information
- MTU information

Unicast communication can also be used, but then several TCC packets must be sent by the BTH for each Bridge that is affected by the new ST topology.

The BTH calculates a new ST based on the received TCE packet and the BTI records from each Bridge. The algorithm for how to find the optimal ST is based on the same principles that are used for STA.

The "BTI for the whole network" field of the TCC packet contains a BTI Record for each Bridge in the network. The BTH might select to enter an intermediate state, where the network topology is to some extent isolating a part of the network in order to avoid temporary loops or for being able to reach Bridges that can not be reached via Forwarding ports before the new final topology is established. This might require the transmission of more than one TCC packet. Entering an intermediate ST state is in most cases relevant when a multi TCE scenario occurs.

A TCC packet will not be delayed by any Bridge CPUs. A TCC packet can be received on a Blocking port, but will then only be forwarded to the Bridge CPU. The TCC packet propagation thru the network depends on whether unicast, multicast or broadcast communication is used:
- Unicast; the TCC packet is only forwarded on the port, where the destination MAC address of the destination Bridge is learned.
- Multicast; the TCC packet is forwarded on all Forwarding ports and the Bridge CPU if these ports and the Bridge CPU are part of the TCC multicast domain.
- Broadcast; the TCC packet is forwarded on all Forwarding ports and the Bridge CPU.

The "Request for acknowledgement" field specifies which Bridges that are ordered to generate an acknowledgement, i.e. a TCA packet.

The "Request for acknowledgement" field can be used to check if a Bridge is still connected to the network and the health of the Bridge in case of e.g. a BTI Timeout TCE.

The "Request for MTU information" field specifies which Bridges that are ordered to add MAC Table Update Information (MTU) in their TCA packets. This information is used by the Bridges that need to update their MAC Tables after the Topology Change has taken effect.

The BTH can send a separate MTU packet or add MTU information directly to the TCC instead of using the "Request for MTU information" in the TCC packet, when all TCA packets are received after the transmission of a TCC packet. Sending a separate MTU packet is relevant in case of several changes in the network topology, while the use of the "Request for MTU information" field or adding the MTU information directly to the "MTU information" field are more relevant in case of a minor Topology Change in the network.

Fig. 12a includes a TCC transmit flow chart and a TCC timer flow chart.

In fig. 12a, the transmit TCC flow chart of the BTH is entered when the "Action" module (cf. Fig. 2) has verified that there is no other Topology Change procedure ongoing unless a multi TCE scenario has been identified and the Bridge is the BTH for all the pending TCEs. The new ST is calculated based on any topology change or changes that have trigged the TCC and the new ST is copied to the new topology database, A, see Fig. 2, and the changes related to the Bridge itself is implemented on the Bridge and the current database, B, is updated with this information. The Bridge checks if a ST intermediate state should be entered before the new ST is established in order to avoid temporary loops before this new ST topology is achieved. The configuration and the database content of the Bridge are changed accordingly if an intermediate ST state is required. The Bridge verifies whether TCA is required from one or more Bridges in the network and if the requested TCA should contain MTU information or not. If TCA packets are not required, then MTU information is added to the TCC packet. In this case, acknowledgement is received via new BTI received within a pre-defined time interval. If this is not received within this time period, then the TCC packet is re-transmitted, see the TCC timer flow chart for details in fig. 12a.

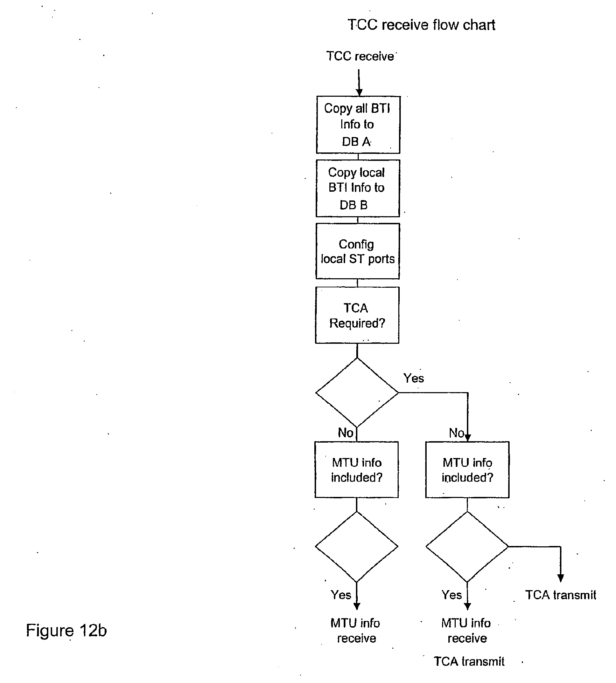

Fig. 12b is a TCC receive flow chart, illustrating the TCC receive procedure according to a preferred embodiment of the invention. The flow chart shows the steps that is performed in order to handle a received Topology Change Command.

The TCC receive procedure comprises the steps of updating the topology model with BTI information, determining if a topology change acknowledment (TCA) is requested in the TCC command, determining if MAC table update information (MTU) is included in the TCC command, and if MTU is included, to perform a MTU receive procedure (see below).

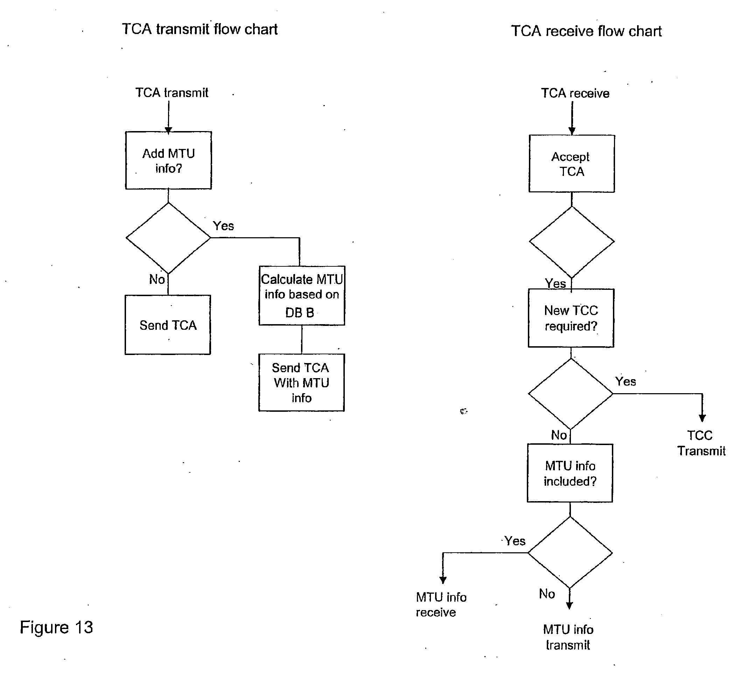

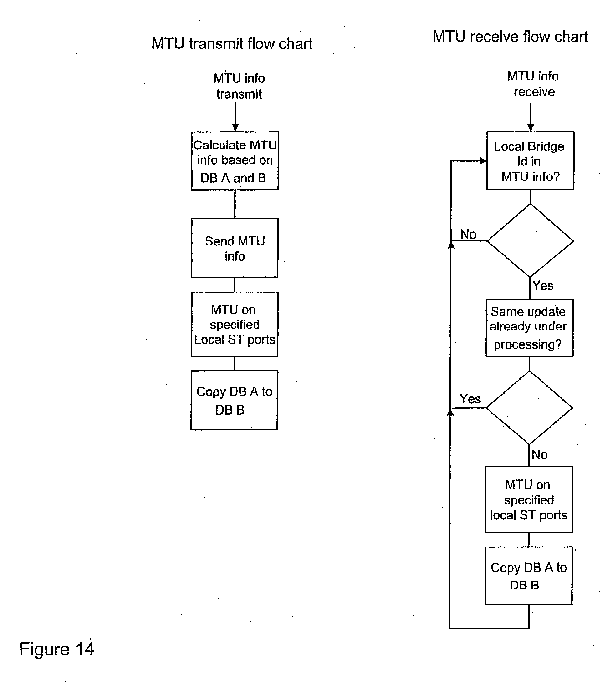

More specifically, in the TCC receive procedure, new BTI for the whole network is copied into database A, see Fig. 2, the BTI related to the Bridge itself is copied to database B and the port changes related to the local Bridge are also implemented. The Bridge checks if the received TCC packet contains MTU information or not. The MTU info receive flow chart is entered if the TCC contains such information, see Fig. 14. The TCA transmit flow chart is entered if a TCA is requested, see Fig. 13.

### Topology Change Acknowledgement (TCA)

The Bridges that are instructed by the BTH to change their port states on one or more ports might also be ordered to send a Topology Change Acknowledgement packet back to the BTH. This is specified for each Bridge in the "Request for acknowledgement" field of the TCC packet.

A TCA packet contains the following:
- TCA packet identifier
- Bridge Id parameters
- TCC reference
- MTU information

The TCA packet is forwarded towards the BTH in same way as for TCE packets. The TCA packet is first of all meant for the Bridge Topology Handler, but the TCA packet may also contain MTU information if the "Request for MTU information" field of the received TCC packet orders the Bridge to add "MTU information". MTU on the Bridges that are affected by the Topology Change can be performed as soon as the last TCA packet is generated. The TCA packet must be propagated not only to the BTH if MTU information is included. Thus, unicast can not be used if the TCA packet contains MTU information.

A Bridge that generates a TCA packet with MTU information must calculate the MTU information based on its knowledge of the changes in the network topology, see next section: "MAC Table Update (MTU)".

The BTH will generate a new TCC packet with the same TCC reference as the previous TCC packet if a TCA from each of the Bridges ordered to generate a TCA packet is not received within a pre-defined interval.

Fig. 13 includes a TCA transmit flow chart and a TCA receive flow chart.

TCA transmit flow chart in fig. 13 illustrated the TCA transmit procedure, which is implemented according to a preferred embodiment of the invention.

The TCA transmit procedure comprises the step of transmitting a TCA packet to the network, said packet including MTU information calculated from the spanning tree model if MTU information is required.

More specifically, a check is performed to determine if MTU information shall be added to the TCA packet before the TCA packet is sent or not.

In fig. 13, the receive TCA flow chart checks that the received TCA packet is the TCA that the BTH (the Bridge itself) has requested. The Bridge checks whether a new TCC packet shall be sent. This is relevant in case an intermediate ST state is used. The TCC transmit flow chart is entered if another TCC is required, see Fig. 12a, while the TCA packet will be checked for a MTU field if a new TCC packet is not required.

The MTU receive flow chart, see Fig. 14, will be entered if such a field is found, otherwise the MTU info transmit flow chart is entered, see Fig. 14.

### MAC Table Update (MTU)

The BTH or a Bridge requested for a TCA packet with "MTU information" will generate such a packet, when the Topology Change procedure is completed. The MTU information is meant for those Bridges that are affected by the Topology Change.

The algorithm for how to find the Bridges and their ST ports that are affected by the TCE is based on the same principles that are used by STA except for the fact that the whole ST is calculated on each Bridge in the network. Thus, a new active topology is calculated and compared towards the old active topology. Those Bridges and their ports that differ will be identified in the MTU.

The MTU packet contains the following:
- MTU packet identifier
- Bridge Id's and ports where MAC update are required

A MTU packet propagates thru the network in the same way as a TCC packet. Thus multicast or broadcast communication is preferred.

Fig. 14 includes a MTU transmit flow chart and a MTU receive flow chart.

According to the MTU transmit flow chart shown in Fig. 14, the BTH sends a MTU packet. The MTU information is calculated from data in database A and B by the "Topology calculator", see Fig. 2. A MTU message is then sent to all Bridges in the topology and the active topology database is updated, database B in Fig. 2.

The MTU Receive procedure, which is implemented according to a preferred embodiment of the invention, is illustrated in the MTU receive flow chart in fig. 14. According to this procedure, the Bridge checks if the local Bridge Id is found in the MTU upon the reception of a MTU packet. The MTU will be discarded if the Bridge already has received the same MTU information from another Bridge that has detected the same TCE. The MAC table is updated based on the specified ports and the active topology database is updated, database B in Fig. 2.

### Topology Save Command (TSC) and Topology Difference Command (TDC)

During engineering of a network many different parameters may be assigned to the Bridges in the network that will have impact on the network topology. When the complete network is operational as defined during engineering for the first time or after a rebuild or upgrade of the network a Topology Save Command (TSC) can be sent to all Bridges in the network. A TSC can be generated and sent by e.g. the Root Bridge or e.g. a Network Management Station (NMS). Such a command is typical initiated by a user. A shadow database holding a copy of the topology is then saved and may not be changed until a new TSC is received. This topology is considered as the preferred network topology. A difference between the preferred topology and current topology can be used for generating an alarm that is sent to a predefined NMS, i.e. a Topology Difference Command (TDC). This can be done by using the popular Simple Network Management Protocol (SNMP) or similar protocols. TDC packets can be sent in case of a TCE or on fixed intervals as long as the active topology differs from the preferred topology stored in the shadow database. The following principles can be used in order to minimize the communication of TDC packets:
- Only the Root is allowed to send TDC packets.
- One or a few pre-defined Bridges are allowed to send TDC packets.
- The Bridge or Bridges that are affected by the Topology Change are allowed to send TDC packets.

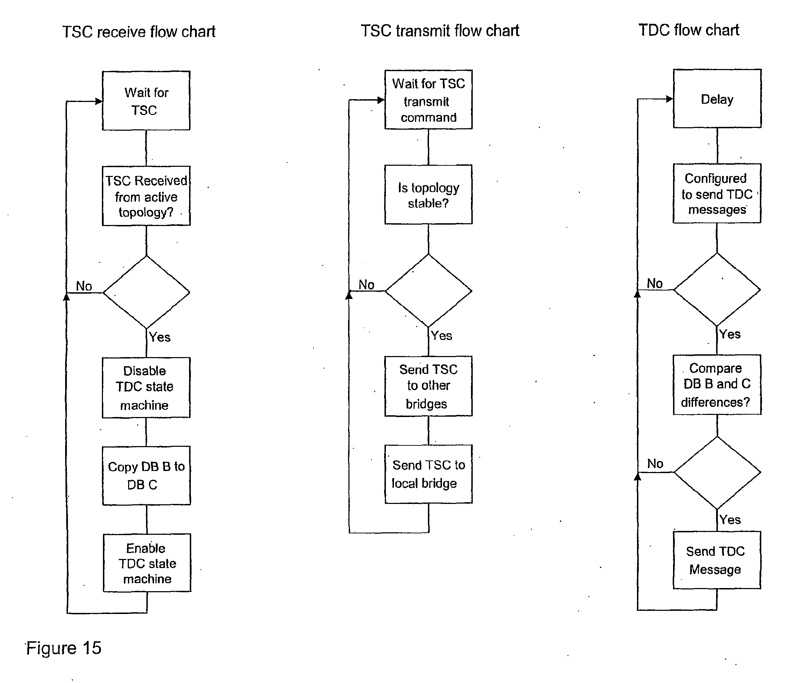

Fig. 15 includes a TSC receive flow chart, a TSC transmit flow chart and a TDC flow chart.

According to a preferred embodiment, the method according to the invention comprises the steps of receiving a Topology Save Command (TSC) from the network, and saving in a database the current topology model upon the receiving of a TSC.

The process performed upon the received TSC is more specifically illustrated by the TSC receive flow chart in Fig. 15. This process waits for a TSC command received via the "Action" module, see Fig. 2. When a TSC is received it is checked that it is sent from a Bridge within the active topology, by searching database B, see Fig. 2. The command is further processed if a match is found, otherwise it will be discarded. The TDC flow chart is disabled during the database copy process.

In the process illustrated by the TSC transmit flow chart in Fig. 15, a check is first made that no topology changes is in progress before any TSC packet is transmitted when a TSC transmit command is received. The command is discarded if a topology change is in progress, otherwise TSC messages will be sent to all other bridges in the topology.

The process illustrated by the TDC flow chart in Fig. 15 will send TDC packets on a regular basis if the Bridge is configured for this service and a difference between database B and C is found, see Fig. 2.

The TCE, TCC, TCA, MTU, TSC and TDC packets should preferably be protected by priority in order to reduce the probability for packet loss and for achieving minimum network latency of these packets.

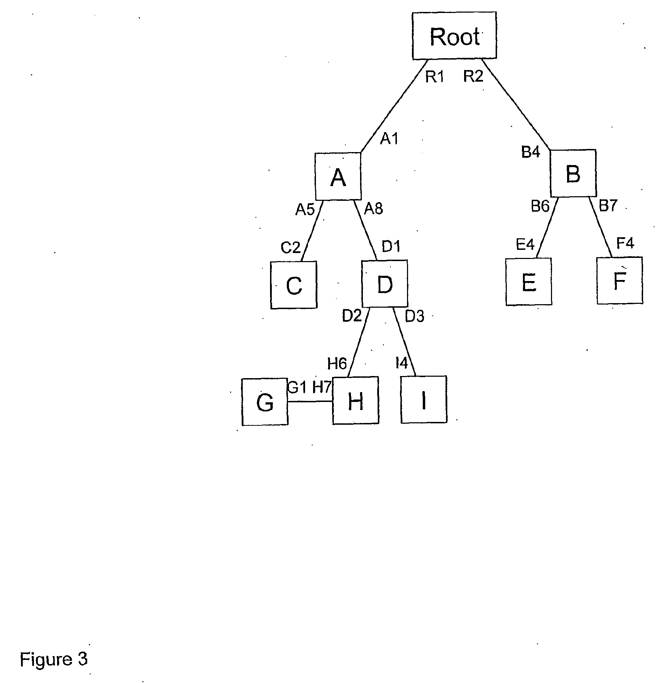

The figures 3, 4a-c, 5a-b, 6a-b, 7a-b, 8a-b, 9a-b and 10a-b all illustrate examples of Spanning Tree Topologies of a network, wherein network elements (referred to as Bridges for simplicity) are included. In all these figures, the Bridges are identified by the reference terms A...I and Root, respectively. The port numbers of a Bridge are denoted by the Bridge reference term followed by a port number, such as ports A5, A8 for Bridge A. The port numbers of the Root Bridge are denoted by R1 and R2.

### EXAMPLE 1 - Root Bridge as BTH - Rule Set 1.

Fig. 3 is a graph illustrating an initial Spanning Tree topology of a network. Every Bridge in the network is a network element according to the invention, and the total topology information is known on every Bridge.

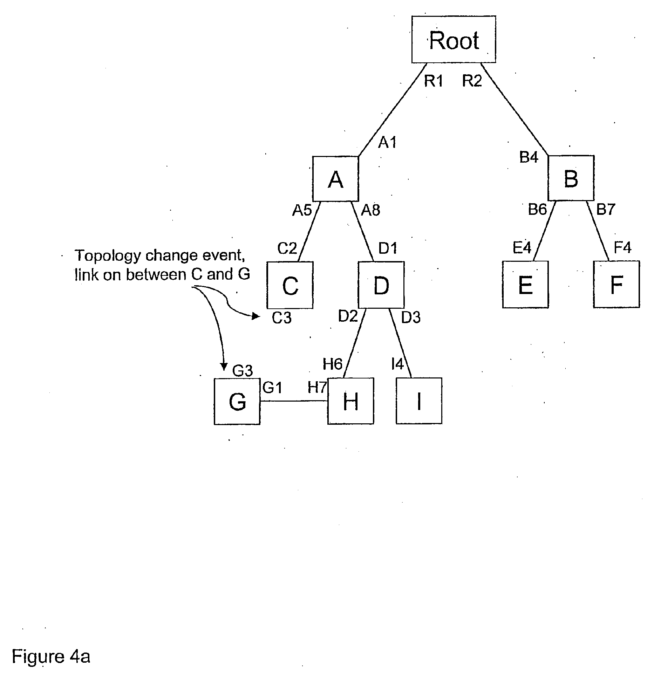

Fig. 4a is a graph showing the same topology as in Fig. 3, but with a Topology Change occurring in the network. A link between Bridge C and G is established.

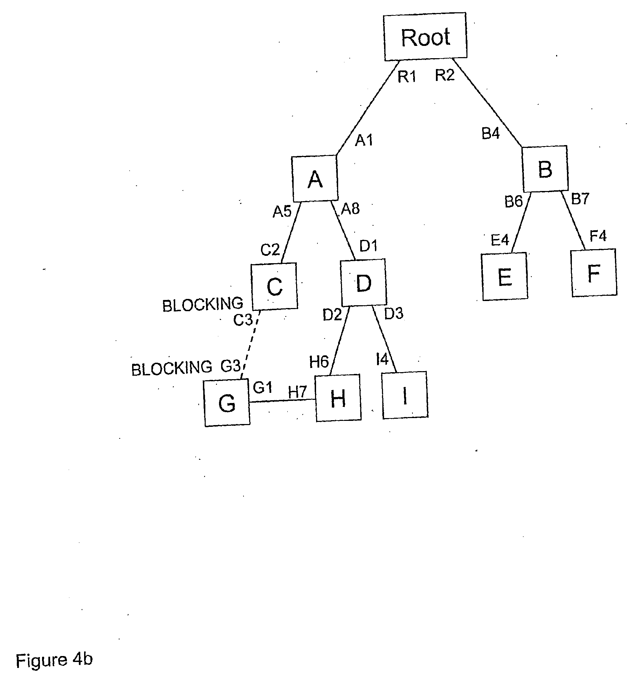

Fig. 4b is a graph showing the same topology as in Fig. 3, after the Topology Change event. In fig. 4b, both port C3 on Bridge C and port G3 on Bridge G are put in Blocking state. This is done by the two Bridges without any interaction with Root or any other Bridges. The Bridges, C or G, sends a multicast Topology Change Event (TCE) packet to the Root Bridge. The Root Bridge identifies whether the received TCEs represent a potential loop. It can be seen from Fig. 4b that a loop between Bridge A, C, G, H and D is established. The Root Bridge calculates the new ST based on the new path cost parameters of the link between Bridge C and G. The new calculation shows that the new ST shall use this link (C3 and G3 in Forwarding state), while the link between Bridge G and H shall be a backup link.

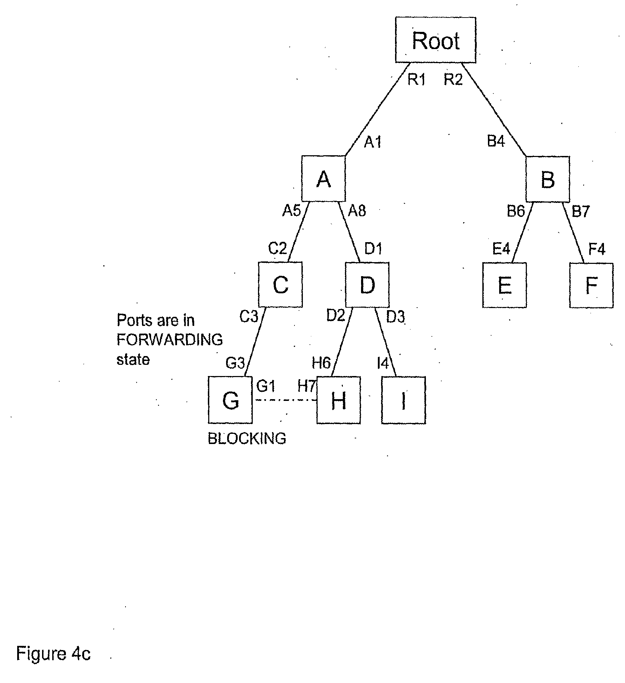

The Root Bridge sends a multicast Topology Change Command (TCC) packet, where port G1 is put in Blocking state and port G3 in Forwarding state of Bridge G and port C3 of Bridge C is put in Forwarding state, see Fig. 4c. The TCC packet also contains MTU information, where the Bridges A, C, G, H and D with ports A5 and A8, C2 and C3, G3 and G1, H7 and H6 and D1 and D2 respectively, are ordered to clear the MAC addresses associated to these ports. The TCC packet with MTU information is sent on the whole network. The packet is received on all Bridges in the network, and all Bridges will either perform port state changes or MTU, except on the Bridges: I, B, E and F that are not affected by the topology change. The Root Bridge, i.e. the Bridge Topology Handler, will not request for TCA packets from Bridge C and G, but all Bridges including the Root Bridge will receive BTI packets with new topology information telling the Bridges that the new active topology is achieved. This means that the Topology Change procedure is completed. The TCC packet will be re-sent if such new information is not received within a pre-defined time interval on the Root Bridge.

The communication of TCE, TCC, TCA, MTU, TSC and TDC packets between the TCE detecting Bridges, the Bridges that are affected by the TCE and the Root Bridge can be changed in such manner that the property of the Root Bridge acting as the "master" in the network is more or less removed. The Root Bridge can still be the focal point in the network in terms of path cost calculation, but the Root Bridge does not participate in the handling of a Topology Change unless the Root Bridge is a TCE detecting Bridge, or is affected by a TCE in the network. An alternative TCE handling can be to introduce the Sub-Root, Sub-Tree and TCE Handling Bridge definitions (corresponding to Rule Set 2, 3 and 4, respectively).

A Sub-Root Bridge, i.e. the Bridge Topology Handler, for a given TCE is identified based on the location of the TCE in the ST. A Sub-Tree is defined as the part of the ST that is affected by the TCE. Several different criteria's can be used in order to define which Bridge that shall be the Sub-Root in a given Sub-Tree. One solution is as follows:

The TCE detecting Bridge or Bridges are always considered as the candidate(s) for being the Sub-Root of the TCE. If two Bridges detects the same TCE, then the Bridge closest to the Root Bridge in terms of path cost via Forwarding ports to the Root Bridge will be further considered as the candidate. If the TCE does not introduce a loop in the network, then this Bridge will be selected as the Sub-Root. If the TCE represents a new loop in the network, then the TCE detecting Bridges must identify the Bridge in the loop that is the Bridge closest to the Root Bridge in terms of path cost via Forwarding ports to the Root Bridge. This Bridge will be selected as the Sub-Root. BTI packets will be inter-changed on the new link between the two Bridges in case of a link establishment between the two Bridges. It is convenient that the latest BTI from the whole network is known by the two Bridges before any Topology Change procedure is started. This might introduce some extra delay in case of a link establishment TCE is processed, but this is not real time critical since a new link represents more and not less network paths. Note, however, that other selection criteria can also be used.

### EXAMPLE 2.1 - Sub-Root Bridge as BTH - Rule Set 3:

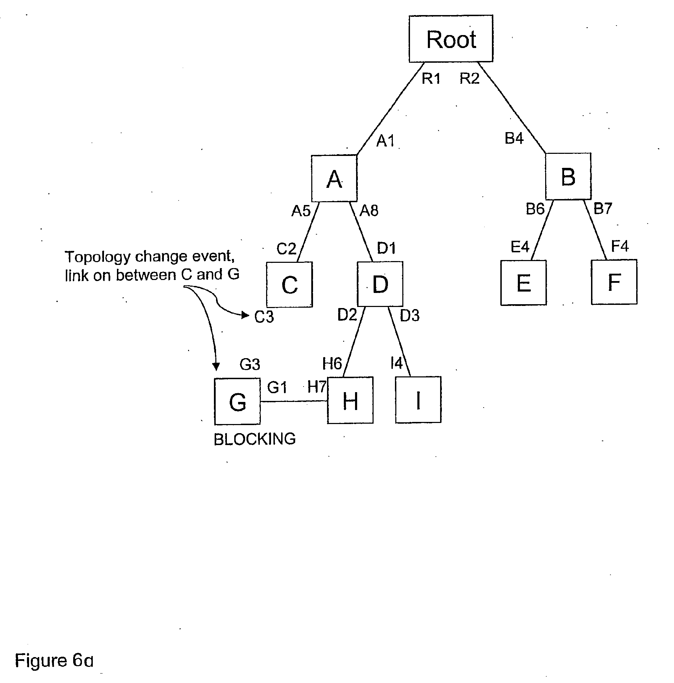

In Fig. 6a, Bridge A will be selected as the Sub-Root for the TCE between Bridge C and G.

### EXAMPLE 2.2 Sub-Root Bridge as BTH - Rule Set 3:

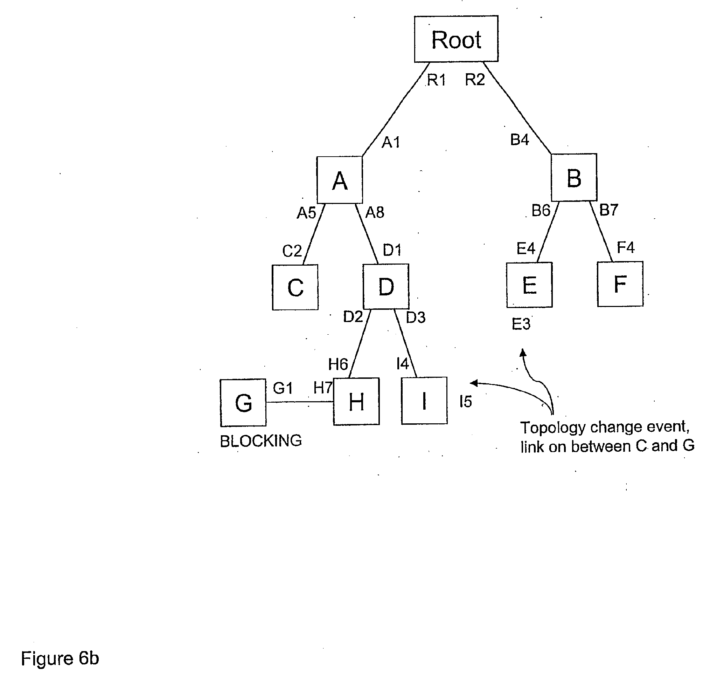

In Fig. 6b, the Root Bridge is selected as the Sub-Root for the TCE generated between Bridge E and I.

### EXAMPLE 2.3 - Sub-Root Bridge as BTH - Rule Set 3:

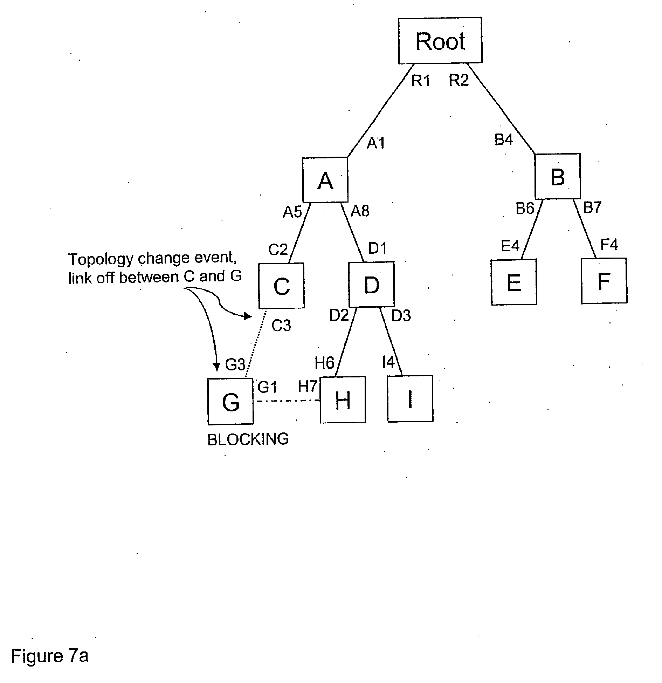

In Fig. 7a, Bridge C is selected as the Sub-Root for the TCE generated between Bridge C and G, because C is closer than G to the Root Bridge in terms of path cost via Forwarding ports to the Root Bridge. This is known by both Bridges. Bridge G is allowed to change the state of port G1 to Forwarding, and can also update its MAC table prior to the reception of a TCC command from Bridge C or A. Thus, the TCE might be caused by Bridge C being lost from the network. In this case A will be chosen as the Sub-Root.

Several TCEs generated more or less simultaneously, will be handled in a sequence by the Root Bridge in case the Sub-Root implementation is not used. The Root Bridge might modify an ongoing Topology Change procedure if a new TCE packet with new information is received during the ongoing Topology Change procedure. The Root Bridge might select to put parts or even all ST enabled ports in the network in Blocking state in a multi TCE scenario. The use of Sub-Roots can also handle the situation where several TCEs are generated more or less simultaneously and the Sub-Trees of the TCEs are overlapping. The top-most Bridge in a Sub-Tree containing all the TCEs, is selected as the Sub-Root. This Bridge is responsible for handling the multi TCE scenario. The principles of handling a multi TCE scenario, when Sub-Root principles are used, are the same as for the Root Bridge when the Sub-Root implementation is not used.

A complete connection loss of a Bridge might be considered as a multi TCE scenario, where it is convenient to put each ST enabled port except one on each Bridge in Blocking state, since the establishment of a new active topology might involve several topology changes in the network with a new Bridge chosen as the Root Bridge.

An ongoing Topology Change procedure handled by a Sub-Root Bridge or a TCE detecting Bridge might need to stop if a TCC command is received from another BTH closer to the Root Bridge in terms of path cost via Forwarding ports.

The introduction of the Sub-Root definition can be further developed by allowing any TCE detecting Bridge to act as the Bridge Topology Handler, i.e. to operate according to Rule Set 4. This can reduce the number of packets required and the time it takes for achieving a new active topology in case of a TCE. Thus, we can fully utilize the fact that every Bridge in the network has full knowledge of the network topology, and that each Bridge is capable of calculating and handling the establishment a new active topology based on a TCE. A change in the active topology is in most cases relevant on one or more of the ST ports on a TCE detecting Bridge. This means that a TCE detecting Bridge can make some or all of these required changes before any TCC and MTU information are sent to other Bridges. Some TCEs will be detected by two Bridges, e.g. a "link up" TCE. Such TCE should preferably be handled by one of the TCE detecting Bridges. Which one, may depend on several different criteria's. One solution is that the Bridge closest to the Root Bridge, i.e. the focal point, in terms of path cost via Forwarding ports to the Root Bridge is responsible for the handling of the TCE. BTI communication might be required in order for the TCE detecting Bridges to verify which Bridge that shall handle the TCE. However, it is not mandatory that only one of the TCE detecting Bridges handles the TCE in case of a link establishment. A "link loss" TCE between two Bridges will also involve two TCE detecting Bridges, and communication between these two Bridges is often not possible after a "link loss" TCE. None of these two Bridges know whether the TCE was caused by a link loss or that the neighbor Bridge is completely disconnected from the network. Thus, both TCE detecting Bridges start a Topology Change procedure involving local Topology Changes and transmission of TCE, TCC and MTU information. This means that we have two Bridge Topology Handlers. The two TCE detecting Bridges will send the same information. This means that the other Bridges in the network will receive the same information twice, but the Bridges affected by the TCE should only execute the received commands once. These Bridges are able to verify that the same information is received from each of the TCE detecting Bridges by comparing the received TCE packets, inspection of the "BTI for the whole network" field of the two received TCC packets, and the fact that the content of the two received MTU packets (which may be part of the TCC packet) are equal if this information is received within a reasonable small pre-defined time interval. This procedure works both for a link loss and also in some cases for a complete loss of a Bridge in the network. It is convenient that the Bridges that receive the TCC and MTU information send TCA packets to both the TCE detecting Bridges even though the commands are only executed once.

### EXAMPLE 3 - "TCE Handling Bridge as BTH "link up" - Rule Set 4:

Both Bridge C and G in Fig. 4a detect the "link up" TCE between Bridge C and G. Port C3 on Bridge C and port G3 on Bridge G are both put in Blocking state and both Bridges send a TCE packet about the TCE and then waits Tprop seconds. Both Bridge C and G can based on the TCE and on BTI exchange between these two Bridges calculate the new active topology that will be relevant and agree that Bridge G shall be the BTH for this TCE, see Fig. 4c. Bridge G puts port G1 in Blocking and port G3 in Forwarding, and then sends a TCC packet with MTU information. The TCC part is meant for Bridge C, i.e. put port C3 of Bridge C in Forwarding state, while the MTU part is meant for the Bridges C, A, D and H.

### EXAMPLE 4.1 - TCE Handling Bridge as BTH "link off"- Rule Set 4:

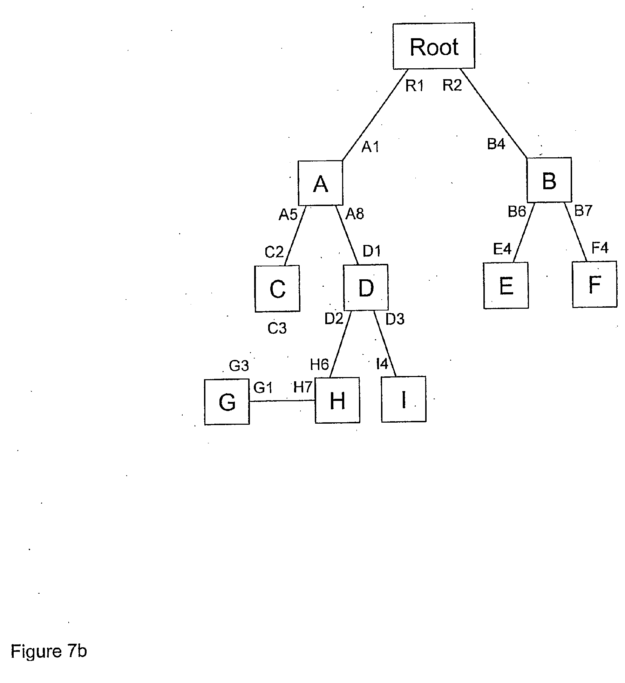

Fig. 7a shows an active topology, where a "link off" TCE is found between Bridge C and G. Both C and G detects this TCE, and both Bridges start a TCE handling procedure based on the assumption that the link between these two Bridges is off. Both Bridges will send a TCC packet containing topology information that this link is off and MTU information telling Bridge G, H , D, A and C to update their MAC tables. Bridge A, D and H are also affected by this TCE. They are all able to verify that TCE is caused by a link loss between Bridge C and G because the same topology information is received from these two Bridges. Thus, the new active topology shown in Fig. 7b is achieved very fast.

A problem that will appear with the above described technique is related to the multi TCE scenario. I.e. one or more new TCEs are generated while one or two TCE detecting Bridges already are handling a TCE, or the same TCE generates TCC and MTU information from different TCE detecting Bridges, where both the TCC and MTU part differs. This can be solved by using the following principles:

All Bridges in the ST will put their ST enabled ports except one in Blocking state as soon as they detect a multi TCE scenario. The Root Bridge will then calculate the new active topology based on all received TCEs, and propagate the new topology information thru the network as earlier described. Thus, the Root Bridge acts as the Bridge Topology Handler.

An alternative solution to this is as follows:

Those Bridges belonging to the Sub-Tree, where more than one TCE appear will put all their ST enabled ports except one in Blocking state. The Bridge, i.e. Sub-Root, closest to the Root Bridge in terms of path cost via Forwarding ports will become the Bridge Topology Handler. This Bridge will handle the establishment of a new active topology based on all the received TCEs, and propagate the new topology information thru the network by following the principles as earlier described.

Putting all ST enabled ports on all Bridges in the ST or the Sub-Tree where the TCEs occurred can be optimized. Thus, the Root or Sub-Root can identify a sub-set of the ST enabled ports on which Bridges that must be put in Blocking state.

### EXAMPLE 4.2 - TCE Handling Bridge as BTH "link off" - Rule Set 4:

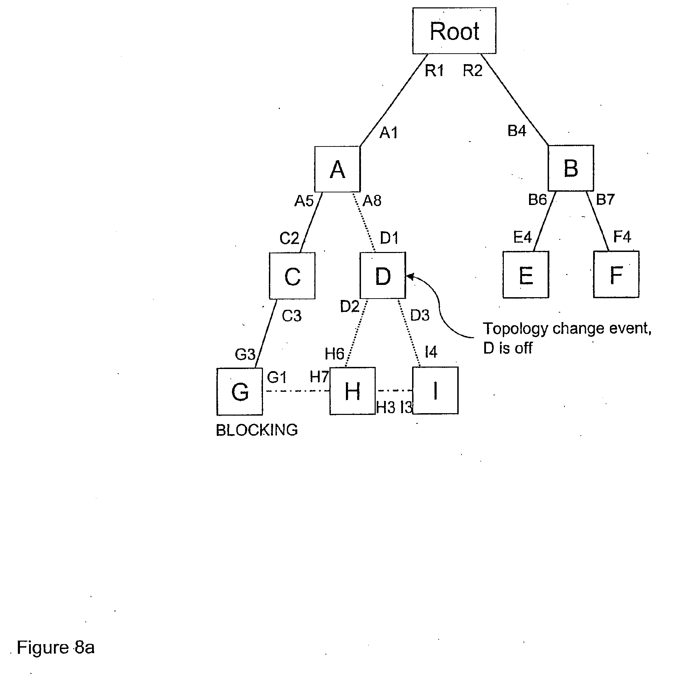

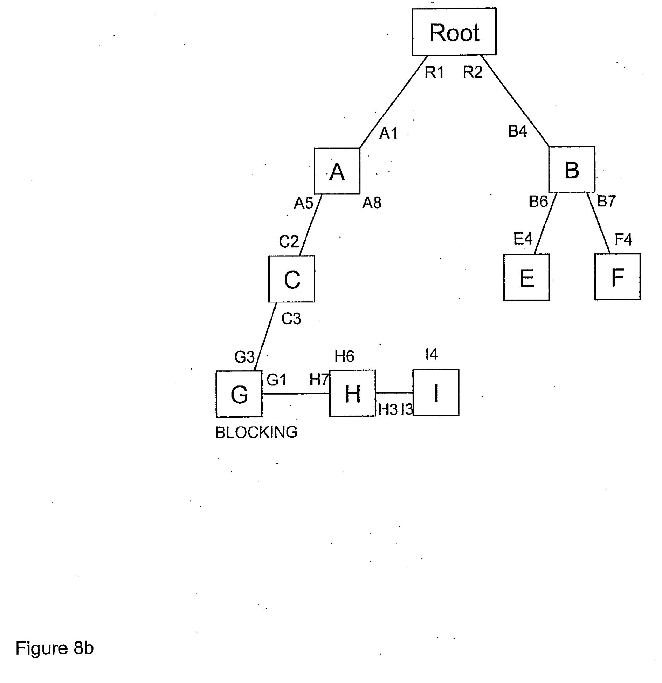

Fig. 8a shows an active topology, where a "link off" TCE is detected on the Bridges A, H and I. These Bridges see the same TCE. I.e. Bridge D is off. Bridge A assumes that the link between A and D is lost, Bridge H assumes that the link between H and D is lost and Bridge I assume that the link between I and D is lost. These Bridges will send a TCC packet containing topology information that their respective link towards Bridge D is off, and Bridge A and H will send MTU information telling Bridge G, H , D, A and C to update their MAC tables, while Bridge I will send MTU information telling Bridge H, D and I to update their MAC tables. The other Bridges will receive MTU and topology information that differs. This scenario should therefore be handled as a multi TCE scenario even though the loss of Bridge D is a single point of failure. It is also possible for the other Bridges to verify based on the incoming TCC and MTU information from the three TCE detecting Bridges that this is a single TCE scenario involving a loss of Bridge D, and act according to the received command(s) resulting in the new topology shown in Fig. 8b.

### EXAMPLE 4.3 - TCE Handling Bridge as BTH "link off" - Rule Set 4:

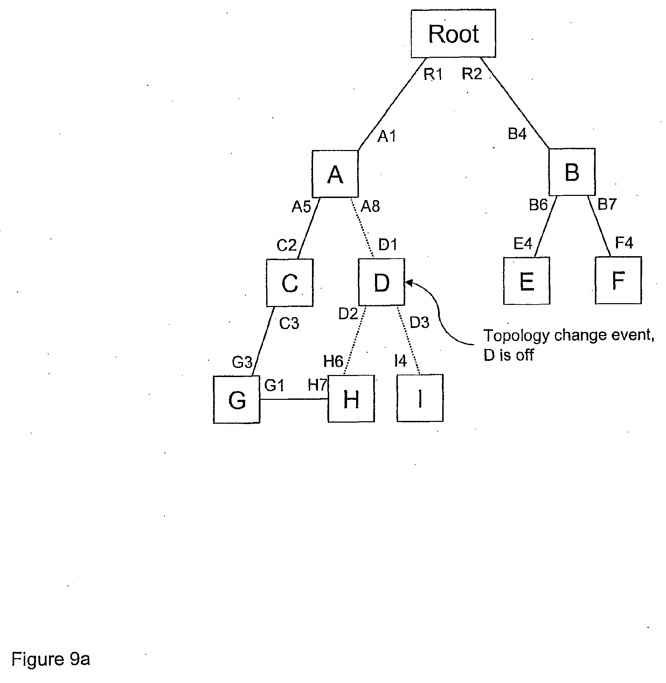

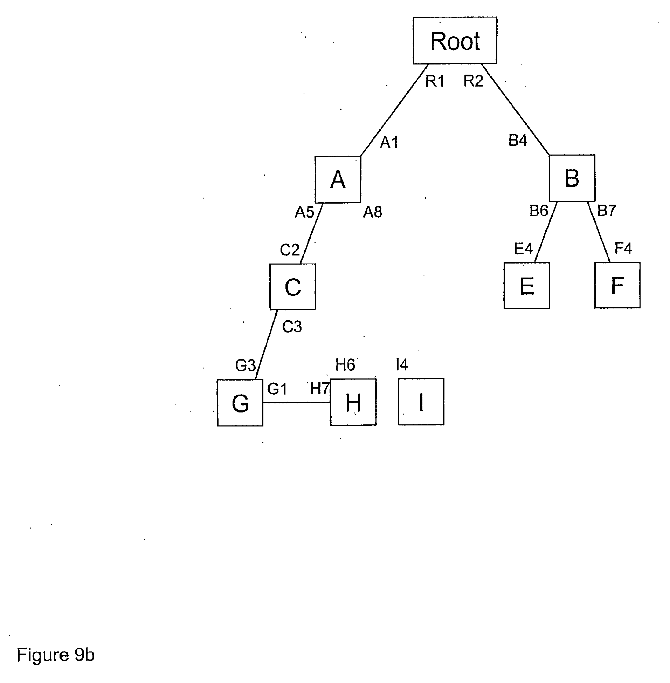

Fig. 9a shows an active topology, where a "link off" TCE is found on the Bridges A, H and I. These Bridges see the same TCE. I.e. Bridge D is off. Bridge A assumes that the link between A and D is lost, Bridge H assumes that the link between H and D is lost and Bridge I assume that the link between I and D is lost. Both Bridge A and H will send a TCC packet containing topology information that their respective link towards Bridge D is off and MTU information telling Bridge G, H , D, A and C to update their MAC tables, while Bridge I will not do anything, because it has no longer a connection to the network. The other Bridges receive the same MTU information, while the topology information differs. They can, however, verify that this is a single TCE scenario involving a loss of Bridge D, and act according to the received command(s) resulting in the new topology shown in Fig. 9b. A conservative approach could be to handle this also as a multi TCE scenario.

The implementation of using the Root Bridge as the only possible BTH in a network does not require that all the other Bridges in the network have full knowledge of the network topology. Only local and Bridge neighbor information is required on a non Bridge Topology Handler. This includes the same information that is known on a STA enabled Bridge in addition to which ST port on which neighbor Bridge each ST port is connected. This BTI can be is sent as earlier described. An alternative is to send this BTI directly to the Root Bridge as unicast data that is sent on Forwarding ports, or a combination of these two methods can be used. The Root Bridge will then calculate the ST based on the BTIs and TCE received and send and receive TCC, TCA and MTU information in the same way as earlier described. This principle can also be used in case the Sub-Root implementation is used. The Bridges operating as Sub-Roots should be preconfigured via e.g. management as potential Sub-Roots or a given rule set can be used in order to identify potential Sub-Root candidates. A Sub-Root Bridge must know the whole network topology or at least the topology information related to Sub-Tree where it is the Sub-Root, while the Bridges in the Sub-Tree do not need to know more than local and Bridge neighbor information as earlier described. This BTI is sent to one or all of the available Sub-Roots in the network. It is also possible that a Bridges has knowledge of only a part of the network. The part of a network, where a Bridge shall maintain topology information can be configured via management.

The above specification has described a network element and a method of controlling a network element (or Bridge for simplicity). When a network is built up with Bridges according to the invention, an efficient, fast re-configuration performance is achieved for the entire network. However, a substantial advantage is also achieved even though some of the Bridges in the network do not support fast re-configuration provisions according to the invention. The following principles are relevant in this context:
- BTI packets are forwarded thru the Bridges without support for fast reconfiguration. I.e. the BTI is sent more than one network hop in case the hops is based on Bridges without support for fast re-configuration.
- The STA, RSTA or similar protocol is used between the fast reconfiguration Bridges that are connected to Bridges supporting STA, RTSA or similar protocols in order to achieve reasonable protocols fast reconfiguration of the Bridges supporting only the STA, RSTA or similar
- STA or RSTA packets will not be forwarded thru the network via Bridges supporting fast re-configuration. Thus, a set of Bridges supporting STA or RSTA connected to each other and neighbor Bridges supporting fast reconfiguration and STA, RSTA and/or similar protocols connected to these Bridges is handled as a separate STA or RSTA network.

Although the invention has been described with reference to preferred, specified embodiments and some alternatives and variations, the person skilled in the art will realize that many obvious modifications exist within the scope of the invention, as set forth by the following set of claims.

## Claims

1. Method for controlling a network element with a plurality of communication ports for transmitting and receiving data packets to and from other network elements in a network, wherein a spanning tree topology model of the network is stored in at least one database in the network element, said method comprising the following steps:
(a) detecting an event indicating a change in the topology of the network;
(b) updating the spanning tree topology model of the subset of the network based on information derived from the topology change event, said subset including the origin of the topology change event and the network elements that are affected by the topology change,
(c) determining if the network element is operating as a topology handler for the detected event, and
(d) if the network element is operating as a topology handler, to perform the following steps:
(d1) calculating a new spanning tree topology model, based on the model resulting from the updating step (b), and
(d2) transmitting a topology change command to the network, said command including information about the new spanning tree topology model,
**characterized in**
- **that** said detecting step (a) comprises one of the following steps:
(a1) detecting a local topology change event, or
(a2) detecting a non-local topology change event by receiving a topology change event data packet or a topology change command data packet from the network, and
- **that** the detecting step (a) is followed by the step of
- if the detected event is a local event, to transmit a topology change event information, TCE, and a network element topology information, BTI, to the network.

2. Method according to claim 1, wherein
said topology change event information is transmitted to a network element operating as a topology handler via at least one intermediate network element, said intermediate network element forwarding said topology change event information without delaying it by its central processing unit.

3. Method according to claim 1, wherein
said topology change command is propagated through the network via a network element that forwards the topology change command without delaying it by its CPU

4. Method according to claim 1, further comprising the following step:
(e) if the network element is not operating as a topology handler for the detected event, to perform the following substep:
(e1) if the detected event is a topology change command, to perform a topology change command receive procedure, said topology change command receive procedure comprising the steps of updating the topology model with network element topology information (BTI), determining if a topology change acknowledgement (TCA) is requested in the TCC command,
determining if MAC table update information is included in the topology change command,
and if MAC table update information is included, to perform a MAC table update receive procedure.

5. Method according to claim 4,
further comprising the step of
if a topology change acknowledgement is requested and MAC table update information is not included in the topology change command, to perform a topology change acknowledgement transmit procedure.

6. Method according to claim 5,
wherein the topology change acknowledgement transmit procedure comprises the following steps:
- transmitting a topology change acknowledgement packet to the network, said packet including MAC table update information calculated from the spanning tree model if MAC table update information is required.

7. Method according to claim 1, wherein the detecting step (a1) comprises the detecting of a link up topology change event, a link off topology change event, a path cost parameter change topology change event, a BTI timeout topology change event or a BTI DB update topology change event.

8. Method according to claim 1,
wherein the updating step (b) is followed by the step of
(b1) determining if a topology change procedure is not completed when the topology change event is detected, and if the topology change event was detected when a topology change procedure is not completed, to perform the following substeps:
(b11) aborting any ongoing topology change procedure, and
(b12) updating the spanning tree topology model of the network, based on the new detected topology change event.

9. Method according to claim 1, wherein said updating step (c) involves network topology information, BTI information, derived from the detected event.

10. Method according to claim 1, wherein said determining step (c) involves the application of a rule set which is preselected for application by several network elements in the network.

11. Method according to claim 10, wherein said rule set imposes that a root network element always acts as the topology handler.

12. Method according to claim 10, wherein said rule set involves the use of information about the origin of the detected event in conjunction with topology information retrieved from the spanning tree model in order to determine if the network element is the topology handler for the detected event.

13. Method according to claim 12, wherein said rule set imposes that a restricted numbers of sub-root network elements may act as the topology handler.

14. Method according to claim 12, wherein said rule set imposes that any subroot network element may act as the topology handler.

15. Method according to claim 12, wherein said rule set imposes that the network element acts as the topology handler if the detected event is a local event.

16. Method according to claim 1, wherein said calculating substep (d1) comprises the establishment of an intermediate spanning tree model.

17. Method according to claim 1, wherein the calculating step (d1) is followed by the step of
if the network element is affected by the topology change, to configure the local ports of the network element according to the updated spanning tree topology model.

18. Method according to claim 1, further comprising the step of
- receiving a topology save command from the network, and
- saving in a database the current topology model upon the receiving of said topology save command.

19. Method according to claim 1, further comprising the step of transmitting a topology save command to the network.

20. Method according to claim 1, further comprising the step of transmitting a topology difference command to the network, said command indicating that a difference exist between a preferred network topology and a current topology, said topologies being stored in databases in the network element.

21. Method according to claim 1, wherein the spanning tree topology model involves path cost parameters relating to at least one of: link availability, link speed, duplex connectivity, link type and priority capability.

22. Network element, comprising a plurality of communication ports for transmitting and receiving data packets to and from other network elements in a network, wherein a spanning tree topology model of the network is stored in at least one database in the network element, further comprising processing means arranged to perform a method according to one of the claims 1-21.

23. Computer network, comprising a number of network elements according to claim 22.

## Patentansprüche

1. Verfahren zum Steuern eines Netzwerkelements mit einer Vielzahl von Kommunikationsports zum Senden und Empfangen von Datenpaketen an andere Netzwerkelemente bzw. von anderen Netzwerkelementen in einem Netzwerk, wobei ein Spanning Tree-Topologiemodell des Netzwerks in mindestens einer Datenbank in dem Netzwerkelement gespeichert ist, wobei das Verfahren die folgenden Schritte umfasst:
(a) Erfassen eines Ereignisses, das eine Änderung in der Topologie des Netzwerks anzeigt;
(b) Aktualisieren des Spanning Tree-Topologiemodells des Teilabschnitts des Netzwerks auf der Grundlage von Informationen, die aus dem Topologieänderungsereignis abgeleiter sind, wobei der Teilabschnitt den Ursprung des Topologieänderungsereignisses und die von der Topologieänderung betroffenen Netzwerkelemente umfasst.
(c) Bestimmen, ob das Netzwerkelement als Topologie-Handler für das erfasste Ereignis fungiert, und,
(d) falls das Netzwerkelement als Topologie Handler fungiert, die folgenden Schritte durchzuführen:
(d1) Berechnen eines neuen Spanning Trec-Topologiemodells auf der Grundlage des aus dem Aktualisierungsschritt (b) resultierenden Modells,
(d2) Übertragen eines Topologieänderungsbefehls an das Netzwerk, wobei der Befehl Informationen über das neue Spanning Tree-Topologiemodell enthält, **dadurch gekennzeichnet,**
- **dass** der Erfassungsschritt (a) einen der folgenden Schritte umfasst:
(a1) Erfassen eines lokalen Topologieänderungsereignisses, oder
(a2) Erfassen eines nicht-lokalen Topologieänderungsereignisses durch Empfangen eines Topologieänderungsereignis-Datenpaketes oder eines Topologieänderungsbefehl-Datenpaketes von dem Netzwerk, und
- **dass** der Erfassungsschritt (a) gefolgt ist von dem Schritt:
- falls das erfasste Ereignis ein lokales Ereignis ist, Topologieänderungsereignis-Informationen (TCE) und Netzwerkelementtopologie-Informationen (BTI) an das Netzwerk zu senden.

2. Verfahren nach Anspruch 1, wobei die Topologieänderungsereignis-Information über zumindest ein zwischengeschaltetes Netzwerkelement an ein Netzwerkelement übertragen werden, das als Topologie-Handler fungiert, wobei das zwischengeschaltete Netzwerkelement die Topologieänderungsereignis-Informationen weiter leitet, ohne sie durch seinen Zentralprozessor zu verzögern.

3. Verfahren nach Anspruch 1, wobei der Topologieänderungsbefehl durch das Netzwerk über ein Netzwerkelement verbreitet wird, das den Topologicänderungsbefehl weiter leitet, ohne ihn durch seinen Zentralprozessor zu verzögern.

4. Verfahren nach Anspruch 1, welches ferner den folgenden Schritt umfasst:
(e) falls das Netzwerkelement nicht als Topologie-Handler für das erfasste Ereignis fungiert, den folgenden Unterschritt durchzuführen:
(e1) falls das erfasste Ereignis ein Topologieänderungsbefehl ist, eine Topologieänderungsbefehl-Empfangsprozedur durchzuführen, wobei die Topologieänderungsbefehl-Empfangsprozedur die folgenden Schritte umfasst:
Aktualisieren des Topologiemodells mit Netzwerkelementtopologie-Informationen (BTI),
Bestimmen, ob in dem TCC-Befehl eine Topologieänderungsbestätigung (TCA) angefordert wird,
Bestimmen, ob MAC-Tabellenaktualisierungs-Informationen in dem Topologieänderungsbefehl enthalten sind,
und falls MAC-Tabellenaktualisierungs-Informationen enthalten sind, eine MAC Tabellenaktualisierungs-Empfangsprozedur durchzuführen.

5. Verfahren nach Anspruch 4,
welches ferner den folgenden Schritt umfasst:
falls eine Topologieänderungsbestätigung angefordert wird und keine MAC-Tabellenaktualisierungs-Informationen in dem Topologieänderungsbefehl enthalten sind,
eine Topologieänderungsbestätigung-Sendeprozedur durchzuführen.

6. Verfahren nach Anspruch 5,
wobei die Topologieänderungsbestätigung-Sendeprozedur die folgenden Schritte umfasst:
- Senden eines Topologieänderungbestätigung-Paketes an das Netzwerk, wobei das Paket aus dem Spanning Tree-Modell berechnete MAC-Tabellenaktualisierungs-Informationen enthält, falls MAC-Tabellenaktualisierungs-Informationen erforderlich sind.

7. Verfahren nach Anspruch 1, wobei der Erfassungsschritt (a1) das Erfassen eines LinkUp-Topologieänderungsereignisses, eines LinkOff-Topologieänderungsereignisses, eines Pfadkostenparameteränderung-Topologieänderungsereignisses, eines BTI-Timeout-Topologieänderungsereignisses oder eines BTI DB-Aktualisierung-Topologieänderungsereignisses umfasst,

8. Verfahren nach Anspruch 1,
wobei der Aktualisierungsschritt (b) gefolgt ist von dem Schritt:
(b1) Bestimmen, ob eine Topologieänderungsprozedur nicht abgeschlossen ist, wenn das Topologieänderungsereignis erfasst wird, und falls das Topologieänderungsereignis erfasst wurde, wenn eine Topologieänderungsprozedur nicht abgeschlossen ist, die folgenden Unterschritte durchzuführen:
(b11) Abbrechen einer jeglichen vonstatten gehenden Topologieänderungsprozedur, und
(b12) Aktualisieren des Spanning Tree-Topologiemodells des Teilabschnitts des Netzwerks auf der Grundlage des neuen, erfassten Topologieänderungsereignisses.

9. Verfahren nach Anspruch 1, wobei der Aktualisierungsschritt (c) von dem erfassten Ereignis abgeleitete Netzwerktopologleinformationen, BTI-Informationen, beinhaltet.

10. Verfahren nach Anspruch 1, wobei der Bestimmungsschritt (c) die Anwendung eines Regelsatzes beinhaltet, der für die Anwendung durch mehrere Netzwerkelemente in dem Netzwerk vorab ausgewählt ist.

11. Verfahren nach Anspruch 10, wobei der Regelsatz festlegt, dass ein Root-Netzwerkelement stets als der Topologie-Handler dient,

12. Verfahren nach Anspruch 10, wobei der Regelsatz die Verwendung von Informationen über den Ursprung des erfassten Ereignisses in Verbindung mit aus dem Spanning Tree-Modell gewonnenen Topologieinformationen beinhaltet, um zu bestimmen, ob das Netzwerkelement der Topologie-Handler für das erfasste Ereignis ist.

13. Verfahren nach Anspruch 12, wobei der Regelsatz festlegt, dass eine begrenzte Anzahl von Subroot-Netzwerkelementen als Topologie-Handler dienen kann.

14. Verfahren nach Anspruch 12, wobei der Regelsatz festlegt, dass ein beliebiges Subroot-Netzwerkelement als der Topologie-Handler dienen kann.

15. Verfahren nach Anspruch 12, wobei der Regelsatz festlegt, dass das Netzwerkelement als der Topologie-Handler dient, falls das erfasste Ereignis ein lokales Ereignis ist.

16. Verfahren nach Anspruch 1, wobei der Berechnungs-Unterschritt (d1) die Erstellung eines zwischengeschalteten Spanning Tree-Modells umfasst.

17. Verfahren nach Anspruch 1, wobei der Berechnungsschritt (d1) gefolgt ist von dem Schritt:
falls das Netzwerkelement von der Topologieänderung betroffen ist, die lokalen Ports des Netzwerkelements gemäß dem aktualisierten Spanning Tree-Topologiemodell zu konfigurieren.

18. Verfahren nach Anspruch 1, welches ferner den folgenden Schritt umfasst.
- Empfangen eines Topologiespeicherbefehls vom Netzwerk, und
- Speichern des aktuellen Topalogiemndells in einer Datenbank bei Empfang des Topologiespeicherbefehls.

19. Verfahren nach Anspruch 1, weiches ferner den folgenden Schritt umfasst:
Senden eines Topologiespeicherbefehls an das Netzwerk.

20. Verfahren nach Anspruch 1, welches ferner den folgenden Schritt umfasst:
Senden eines Topologieunterschiedbefehls an das Netzwerk, wobei der Befehl anzeigt, dass zwischen einer bevorzugten Netzwerktopologie und einer aktuellen Topologie ein Unterschied vorliegt, wobei diese Topologien in Datenbanken in dem Netzwerkelement gespeichert sind.

21. Verfahren nach Anspruch 1, wobei das Spanning Tree-Topologiemodell Pfadkostenparameter beinhaltet, die sich auf mindestens eines der Folgenden beziehen: Linkverfügbarkeit, Linkgeschwindigkeit, Duplexverbindungsfähigkeit, Linktyp und Prioritätsbefähigung.

22. Netzwerkelement, welches eine Vielzahl von Kommunikationsports zum Senden und Empfangen von Datenpaketen an bzw. von andere(n) Netzwerkelemente(n) in einem Netzwerk aufweist, wobei ein Spanning Tree-Topologiemodell des Netzwerks in mindestens einer Datenbank in dem Netzwerkelement gespeichert ist, wobei das Netzwerkelement ferner Verarbeitungseinrichtungen aufweist, die dazu ausgelegt sind, ein Verfahren nach einem der Ansprüche 1-21 durchzuführen.

23. Computernetzwerk, welches eine Anzahl von Netzwerkelementen nach Anspruch 22 aufweist.

## Revendications

1. Procédé de contrôle d'un élément de réseau ayant une pluralité de ports de communication destinés à transmettre et à recevoir des paquets de données vers et depuis d'autres éléments de réseau au sein d'un réseau, dans lequel un modèle de topologie en arborescence du réseau est stocké dans au moins une base de données dans l'élément de réseau, ledit procédé comprenant les étapes suivantes :
(a) la détection d'un événement indiquant un changement de topologie du réseau ;
(b) la mise à jour du modèle de topologie en arborescence du sous-ensemble du réseau sur la base d'informations dérivées de l'évènement de changement de topologie, ledit sous-ensemble comprenant l'origine de l'événement de changement de topologie et les éléments de réseau qui sont affectés par le changement de topologie,
(c) la détermination du fait que l'élément de réseau fonctionne ou non comme un gestionnaire de topologie pour l'événement détecté, et
(d) si l'élément de réseau fonctionne comme un gestionnaire de topologie, la réalisation des étapes suivantes :
(d1) le calcul d'un nouveau modèle de topologie en arborescence, sur la base du modèle résultant de l'étape de mise à jour (b), et
(d2) la transmission d'une commande de changement de topologie au réseau, ladite commande comprenant des informations relatives au nouveau modèle de topologie en arborescence, **caractérisé**
- **en ce que** ladite étape de détection (a) comprend l'une des étapes suivantes :
(a1) la détection d'un événement de changement de topologie local, ou
(a2) la détection d'un événement de changement de topologie non local en recevant un paquet de données d'événement de changement de topologie ou un paquet de données de commande de changement de topologie de la part du réseau, et
- **en ce que** l'étape de détection (a) est suivie par l'étape consistant à
- si l'évènement détecté est un événement local, transmettre des informations d'évènement de changement de topologie, TCE, et des informations de topologie d'élément de réseau, BTI, au réseau.

2. Procédé selon la revendication 1, dans lequel lesdites informations d'événement de changement de topologie sont transmises à un élément de réseau fonctionnant comme un gestionnaire de topologie via au moins un élément de réseau intermédiaire, ledit élément de réseau intermédiaire envoyant lesdites informations d'évènement de changement de topologie sans les retarder à l'aide de son unité centrale de traitement.

3. Procédé selon le revendication 1, dans lequel ladite commande de changement de topologie est propagée au sein du réseau via un élément de réseau qui envoie la commande de changement de topologie sans la retarder à l'aide de sa CPU.

4. Procédé selon la revendication 1, comprenant en outre l'étape suivante :
(e) si l'élément de réseau ne fonctionne pas comme un gestionnaire de topologie pour l'événement détecté, la réalisation de la sous-étape suivante :
(e1) si l'événement détecté est une commande de changement de topologie, la réalisation d'une procédure de réception de commande de changement de topologie, ladite procédure de réception de commande de changement de topologie comprenant les étapes consistant à
- mettre à jour le modèle de topologie avec les informations de topologie d'élément de réseau (BTI), et déterminer si un accusé de réception de changement de topologie (TCA) est demandé dans la commande TCC,
- déterminer si des informations de mise à jour de table MAC sont incluses dans la commande de changement de topologie,
- et si des informations de mise à jour de table MAC sont incluses, réaliser une procédure de réception de mise à jour de table MAC.

5. Procédé selon la revendication 4,
comprenant en outre l'étape consistant à
si un accusé de réception de changement de topologie est demandé et si les informations de mise à jour de table MAC ne sont pas incluses dans la commande de changement de topologie, réaliser une procédure de transmission d'accusé de réception de changement de topologie.

6. Procédé selon la revendication 5,
dans lequel la procédure de transmission d'accusé de réception de changement de topologie comprend les étapes suivantes :
• la transmission d'un paquet d'accusé de réception de changement de topologie au réseau, ledit paquet comprenant des informations de mise à jour de table MAC calculées à partir du modèle d'arborescence si les informations de mise à jour de table MAC sont nécessaires.

7. Procédé selon la revendication 1, dans lequel l'étape de détection (al) comprend la détection d'un événement de changement de topologie d'activation de liaison, d'un événement de changement de topologie de désactivation de liaison, d'un événement de changement de topologie de changement de paramètre de coût de résolution, d'un événement de changement de topologie d'expiration do BTI ou d'un événement de changement de topologie de mise à jour de la base de données de BTI.

8. Procédé selon la revendication 1,
dans lequel l'étape de mise à jour (b) est suivie par l'étape consistant à
(b1) déterminer si une procédure de changement de topologie n'est pas effectuée lorsque l'événement de changement de topologie est détecté, et, si l'événement de changement de topologie a été détecté lorsqu'une procédure de changement de topologie n'est pas effectuée, effectuer les sous-étapes suivantes :
(b11) annuler l'éventuelle procédure de changement de topologie en cours, et
(b12) mettre à jour le modèle de topologie en arborescence du réseau, sur la base du nouvel événement de changement de topologie détecté.

9. Procédé selon la revendication 1, dans lequel ladite étape de mise à jour (c) implique des informations de topologie de réseau, des informations BTI, dérivées de l'évènement détecté.

10. procédé selon la revendication 1, dans lequel ladite étape de détermination (c) implique l'application d'un ensemble de règles qui est présélectionné pour une application par plusieurs éléments de réseau du réseau.

11. Procédé selon la revendication 10, dans lequel ledit ensemble de règles impose qu'un élément de réseau racine agisse toujours comme un gestionnaire de topologie.

12. Procédé selon la revendication 10, dans lequel ledit ensemble de règles implique l'utilisation d'informations relatives à l'origine de l'évènement détecté en conjonction avec des informations de topologie recherchées à partir du modèle en arborescence afin de déterminer si l'élément de réseau est le gestionnaire de topologie pour l'événement détecté.

13. Procédé selon la revendication 12, dans lequel ledit ensemble de règles impose qu'un nombre restreint d'éléments de réseau sous-racine puisse agir comme gestionnaire de topologie.

14. Procédé selon la revendication 12, dans lequel ledit ensemble de règles impose que n'importe quel élément de réseau sous-racine puisse agir comme gestionnaire de topologie.

15. Procédé selon la revendication 12, dans lequel ledit ensemble de règles impose que l'élément de réseau agisse comme gestionnaire de topologie si l'événement détecté est un évènement local.

16. Procédé selon la revendication 1, dans lequel ladite sous-étape de calcul (d1) comprend l'établissement d'un modèle d'arborescence intermédiaire.

17. Procédé selon la revendication 1, dans lequel l'étape de calcul (d1) est suivie par l'étape consistant à si l'élément de réseau est affecté par le changement de topologie, configurer les ports locaux de l'élément de réseau selon le modèle de topologie en arborescence mis à jour.

18. Procédé selon la revendication 1, comprenant en outre l'étape consistant, à
- recevoir une commande d'enregistrement de topologie de la part du réseau, et
- enregistrer dans une base de données le modèle de topologie actuel lors de la réception de ladite commande d'enregistrement de topologie.

19. Procédé selon la revendication 1, comprenant en outre l'étape consistant à transmettre une commande d'enregistrement de topologie au réseau.

20. Procédé selon la revendication 1, comprenant en outre l'étape consistant à transmettre une commande de différence de topologie au réseau, ladite commande indiquant qu'une différence existe entre une topologie de réseau préférée et une topologie actuelle, lesdites topologies étant stockées dans des bases de données dans l'élément de réseau.

21. Procédé selon la revendication 1, dans lequel le modèle de topologie en arborescence implique des paramètres de coût de résolution relatifs à au moins l'un de : la disponibilité de la liaison, la vitesse de la liaison, la connectivité duplex, le type de liaison et la capacité de priorité.

22. Élément de réseau, comprenant une pluralité de ports de communication destinés à transmettre et à recevoir des paquets de données vers et depuis d'autres éléments de réseau au sein d'un réseau, dans lequel un module de topologie en arborescence du réseau est stocké dans au moins une base de données dans l'élément de réseau, comprenant en outre un moyen de traitement destiné à effectuer un procédé selon l'une des revendications 1 à 21.

23. Réseau informatique, comprenant un certain nombre d'éléments de réseau selon la revendication 22.
